(19) Europäisches Patentamt
European Patent Office
Office européen des brevets

(11) **EP 4 383 075 A1**

(12) **EUROPEAN PATENT APPLICATION**
published in accordance with Art. 153(4) EPC

(43) Date of publication:
**12.06.2024 Bulletin 2024/24**

(21) Application number: **22857813.4**

(22) Date of filing: **16.08.2022**

(51) International Patent Classification (IPC):
**G06F 9/50** (2006.01)

(52) Cooperative Patent Classification (CPC):
**G06F 9/50**

(86) International application number:
**PCT/CN2022/112834**

(87) International publication number:
**WO 2023/020502 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.08.2021 CN 202110945452**

(71) Applicant: **Huawei Technologies Co., Ltd.
Shenzhen, Guangdong 518129 (CN)**

(72) Inventors:
• **WANG, Jian**
  **Shenzhen, Guangdong 518129 (CN)**
• **ZHANG, Gongzheng**
  **Shenzhen, Guangdong 518129 (CN)**
• **LI, Rong**
  **Shenzhen, Guangdong 518129 (CN)**
• **WANG, Jun**
  **Shenzhen, Guangdong 518129 (CN)**

(74) Representative: **Maiwald GmbH
Engineering
Elisenhof
Elisenstrasse 3
80335 München (DE)**

(54) **DATA PROCESSING METHOD AND APPARATUS**

(57) This application discloses a data processing method and apparatus. The method is applied to a first distributed node in a distributed learning system, and the distributed learning system includes a plurality of distributed nodes, communication models and service models are configured on the distributed nodes. The method includes: obtaining an input parameter of the service model, where the input parameter of the service model includes an output parameter of the communication model, and the output parameter of the communication model is used to represent a communication connection status and/or communication connection quality between the plurality of distributed nodes; and inputting the input parameter of the service model into the service model, to obtain an output parameter of the service model. In this application, the output parameter of the communication model is used as the input parameter of the service model, so that the output parameter of the service model on the distributed node is obtained based on impact of the communication connection status and/or the communication connection quality between the distributed nodes, thereby improving accuracy of the output parameter of the service model, and further optimizing system performance.

FIG. 2A

## Description

This application claims priority to Chinese Patent Application No. 202110945452.7, filed with the China National Intellectual Property Administration on August 17, 2021 and entitled "DATA PROCESSING METHOD AND APPARATUS", which is incorporated herein by reference in its entirety.

## TECHNICAL FIELD

This application relates to the field of wireless communication technologies, and in particular, to a data processing method and apparatus.

## BACKGROUND

With further improvement of network computing capabilities and explosive growth of big data, one of important methods for breaking through bottlenecks of conventional wireless technologies is to introduce an artificial intelligence (artificial intelligence, AI) technology in a wireless network design. The conventional AI technology achieves a great success in extracting features of Euclidean spatial data. However, a lot of data in a wireless system is generated in non-Euclidean space actually, and performance of the conventional AI technology in processing non-Euclidean spatial data is still unsatisfactory. To extend the AI technology to graph data in the non-Euclidean space, based on ideas of convolutional network, cyclic network, and deep automatic encoder, a neural network capable of processing graph data, namely, a graph neural network (graph neural network, GNN), has been proposed and gained high attention.

The GNN aims to map high-dimensional graph data to low-dimensional vector space. Specifically, the GNN uses graph data G (V, E) as an input, and outputs a p-dimensional vector representation of a graph, a node, an edge, or a subgraph. By performing a multi-layer graph convolution operation, the node can continuously aggregate neighboring node information based on a topology structure, to update a status of the node.

In a distributed learning system, a plurality of performance features of a plurality of distributed nodes are typically included. However, during GNN processing, only a single performance feature is usually considered. As a result, system performance cannot be optimized.

## SUMMARY

Embodiments of this application provide a data processing method and apparatus, to optimize performance of a distributed learning system.

According to a first aspect, a data processing method is provided. The method is applied to a first distributed node in a distributed learning system, the distributed learning system includes a plurality of distributed nodes, communication models and service models are configured on the distributed nodes, and the method includes: obtaining an input parameter of the service model, where the input parameter of the service model includes an output parameter of the communication model, and the output parameter of the communication model is used to represent a communication connection status and/or communication connection quality between the plurality of distributed nodes; and inputting the input parameter of the service model into the service model, to obtain an output parameter of the service model.

In this embodiment of this application, the output parameter of the communication model is used as the input parameter of the service model, so that the output parameter of the service model on the distributed node is obtained based on impact of the communication connection status and/or the communication connection quality between the distributed nodes, and impact of a communication factor on a service model learning process is comprehensively considered, thereby improving accuracy of the output parameter of the service model, and further optimizing system performance.

In a possible example, the input parameter of the service model further includes local service-related information of the first distributed node and service-related information of a service neighboring node, where the service neighboring node is a distributed node in the plurality of distributed nodes that has service association with the first distributed node.

In a possible example, the method further includes:

When the service model is at an $i^{th}$ layer, service-related information of a service neighboring node included in an input parameter of the service model is an output parameter obtained by an $(i-1)^{th}$ layer of a service model on the service neighboring node through inference; and when i = 1, the service-related information of the service neighboring node included in the input parameter of the service model is service-related information that is on the service neighboring node and that is obtained without model inference, where $1 < i \leq L$, and L is a total quantity of layers of the service model.

In this embodiment of this application, considering that a service model inference process includes a multi-layer graph convolution operation, service-related information of a service neighboring node obtained through each layer of graph convolution operation may be an inference output obtained through an upper-layer graph convolution operation of the service neighboring node. In addition, the service neighboring node may be adjusted based on the output parameter of the communication model each time before a parameter is obtained. Therefore, all related parameters of a service neighboring node included in an output parameter of each layer of the service model may be obtained from different service neighboring nodes. This can improve flexibility of adjusting the input parameter of the service model based on a communication status.

In a possible example, the output parameter of the communication model is obtained by inputting local communication link information of the first distributed node and communication link information of a communication neighboring node into the communication model on the distributed node for inference, where the communication neighboring node is a distributed node in the plurality of distributed nodes that has a communication connection relationship with the first distributed node.

In a possible example, the communication link information includes communication reachability information, a channel status, and/or an interference status between the first distributed node and another node other than the first distributed node in the plurality of distributed nodes.

The communication reachability information may include communication reachability or communication unavailability. The channel status is channel state information CSI, and may be used to describe a fading factor of a signal on each transmission path, for example, information such as signal scattering, environment fading, and distance attenuation. The interference status refers to an impairment caused to receiving of a desired signal, for example, may be a transmission latency.

In a possible example, the service-related information and/or the service-related information that is obtained without model inference includes one or more of the following: service data, an intermediate result of service model inference, a service type, a data type, and a data distribution parameter.

In a possible example, the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a protocol layer corresponding to service content.

In a possible example, that the service subsystem is deployed at a protocol layer corresponding to service content includes: When the service model is an image classification model or a natural language processing model, the service subsystem is deployed at an application layer based on the service content; or when the service model is a radio resource management decision model, the service subsystem is deployed at a media access control layer based on the service content.

According to a second aspect, a data processing method is provided. The method is applied to a first distributed node in a distributed learning system, the distributed learning system includes a plurality of distributed nodes, communication models and service models are configured on the plurality of distributed nodes, and the method includes: obtaining an input parameter of the communication model, where the input parameter of the communication model includes a first output parameter of a service model, and the first output parameter is used to represent a degree of service association between the plurality of distributed nodes; inputting the input parameter of the communication model into the communication model, to obtain an output parameter of the communication model; adjusting a communication parameter of the first distributed node based on the output parameter of the communication model; obtaining an input parameter of the service model, where the input parameter of the service model includes local service-related information of the first distributed node and first service-related information of a service neighboring node, the first service-related information of the service neighboring node is obtained from the service neighboring node based on the adjusted communication parameter, and the service neighboring node is a distributed node that has service association with the first distributed node; and inputting the input parameter of the service model into the service model, to obtain a second output parameter of the service model.

In this embodiment of this application, the first output parameter of the service model is used as the input parameter of the communication model, where the first output parameter of the service model is used to represent a service association relationship between the plurality of distributed nodes. In this way, when the first distributed node adjusts the communication parameter based on the output parameter of the communication model, impact of the service association relationship is comprehensively considered, so that pertinence of the obtained communication parameter is improved, and accuracy of obtaining, by the service model, an input parameter on the neighboring node based on the communication parameter is improved, thereby optimizing a learning effect of the service model, and optimizing performance of the learning system.

In a possible example, the input parameter of the communication model further includes local communication link information of the first distributed node and communication link information of a communication neighboring node, and the communication neighboring node is a distributed node in the plurality of distributed nodes that has a communication connection relationship with the first distributed node.

In a possible example, the first output parameter of the service model is obtained by inputting the local service-related information of the first distributed node and second service-related information of the service neighboring node into the service model on the first distributed node for inference, and the second service-related information of the service neighboring node is obtained from the service neighboring node based on the communication parameter before the adjustment.

In a possible example, the communication link information includes communication reachability information, a channel status, and/or an interference status between the first distributed node and another node other than the first distributed node in the plurality of distributed nodes, the service-related information includes one or more of the following: service data, an intermediate result of service model inference, a service type, a data type, and a data distribution parameter, and the service-related information includes the first service-related information and the second service-related information.

In a possible example, the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a corresponding protocol layer based on service content.

In a possible example, that the service subsystem is deployed at a protocol layer corresponding to service content includes: When the service model is an image classification model or a natural language processing model, the service subsystem is deployed at an application layer based on the service content; or when the service model is a radio resource management decision model, the service subsystem is deployed at a media access control layer based on the service content.

According to a third aspect, a data processing method is provided. The method is applied to a first distributed node in a distributed learning system, the distributed learning system includes a central node and a plurality of distributed nodes, communication models and service models are configured on the distributed nodes, and the method includes: sending first service-related information and communication link information to the central node; receiving first indication information from the central node, where the first indication information is determined by the central node based on the communication link information and the first service-related information that are sent by the plurality of distributed nodes; determining a first parameter based on the first indication information; receiving second service-related information of a second distributed node based on the first parameter, where the second distributed node is one or more of distributed nodes other than the first distributed node in the plurality of distributed nodes; and inputting an input parameter of the service model into the service model, to obtain an output parameter of the service model through inference, where the input parameter of the service model includes the second service-related information.

In this embodiment of this application, the first distributed node sends the first service-related information and the communication link information to the central node. After obtaining the first service-related information and the communication link information, the central node generates the first indication information based on the two types of information, and the first distributed node determines the first parameter based on the first indication information, and receives the second service-related information of the second distributed node based on the first parameter. In this process, the central node integrates the service-related information and the communication link information to indicate a manner in which the first distributed node obtains the second service-related information, so that pertinence of obtaining the second service-related information is improved, and accuracy of a service model inference result is improved, thereby improving system performance. This process in which the central node generates the first indication information and determines the first parameter may help all the nodes in the system determine the manner of obtaining the second service-related information, so that a data processing amount of the distributed nodes can be reduced, and a communication requirement of the distributed nodes can be reduced (even if communication is unreachable, a communication connection relationship or a service association relationship between two distributed nodes may alternatively be adjusted).

In a possible example, the first indication information indicates the plurality of distributed nodes to adjust a communication parameter, the first parameter is an adjusted communication parameter of the first distributed node, and the determining a first parameter based on the first indication information includes: inputting the input parameter of the service model into the service model to obtain a first output parameter, where the input parameter of the service model includes the first service-related information, and the first output parameter is used to represent a degree of service association between the first distributed node and another distributed node; and inputting an input parameter of the communication model into the communication model to obtain a second output parameter, and obtaining an adjusted communication parameter based on the second output parameter, where the second service-related information is service-related data that is on a service neighboring node and that is obtained based on the adjusted communication parameter, the service neighboring node is determined based on the first service-related information, and the first service-related information is service-related data that is on the service neighboring node and that is obtained based on the communication parameter before the adjustment.

In this embodiment of this application, the first distributed node sends the first service-related information and the communication link information to the central node, where the first service-related information is determined based on the service association relationship. In this case, after obtaining the first service-related information and the communication link information, the central node may adjust the service association relationship based on the current communication condition, to indicate the first distributed node to adjust the service neighboring node based on the adjusted service association relationship, and obtain the service-related information from the adjusted service neighboring node to perform the service model inference process, so that accuracy of a service model inference result is improved, thereby improving system performance.

In a possible example, the first indication information is service-related indication information or service-related information distribution indication information, the first parameter is an adjusted service association relationship, the second distributed node is an adjusted service neighboring node determined based on the adjusted service association relationship, the second service-related information on the second distributed node is service-related information on the adjusted service neighboring node, and the first service-related information is service-related information of the first distributed node and service-related information on a service neighboring node before adjustment.

The service-related indication information indicates whether there is service association between the first distributed node and another distributed node, and the service-related information distribution indication information indicates to distribute mutually associated service-related information to different nodes in the plurality of distributed nodes.

In this embodiment of this application, after obtaining the first service-related information and the communication link information, the central node may adjust the communication parameter based on the current service association relationship, to indicate the first distributed node to perform communication based on the adjusted communication parameter, and obtain the service-related information from the service neighboring node based on the adjusted communication parameter to perform the service model inference process, so that quality of the obtained service-related information can be ensured, and accuracy of a service model inference result is improved, thereby improving system performance.

In a possible example, the communication link information includes communication reachability information, a channel status, and/or an interference status between the first distributed node and another node other than the first distributed node in the plurality of distributed nodes, and the service-related information includes one or more of the following: service data, an intermediate result of service model inference, a service type, a data type, and a data distribution parameter.

In a possible example, the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a corresponding protocol layer based on service content.

In a possible example, that the service subsystem is deployed at a protocol layer corresponding to service content includes: When the service model is an image classification model or a natural language processing model, the service subsystem is deployed at an application layer based on the service content; or when the service model is a radio resource management decision model, the service subsystem is deployed at a media access control layer based on the service content.

According to a fourth aspect, a data processing method is provided. The method is applied to a central node in a distributed learning system, the distributed learning system includes one central node and a plurality of distributed nodes, communication models and service models are configured on the distributed nodes, and the method includes: receiving first service-related information and communication link information that are sent by the plurality of distributed nodes; determining first indication information based on the communication link information and the first service-related information, where the first indication information is used by the plurality of distributed nodes to determine a first parameter, so that a first distributed node in the plurality of distributed nodes receives second service-related information from a second distributed node based on the first parameter; and sending the first indication information to the first distributed node.

In this embodiment of this application, the first distributed node sends the first service-related information and the communication link information to the central node. After obtaining the first service-related information and the communication link information, the central node generates the first indication information based on the two types of information, and the first distributed node determines the first parameter based on the first indication information, and receives the second service-related information of the second distributed node based on the first parameter. In this process, the central node integrates the service-related information and the communication link information to indicate a manner in which the first distributed node obtains the second service-related information, so that pertinence of obtaining the second service-related information is improved, and accuracy of a service model inference result is improved, thereby improving system performance. In addition, a process in which the central node generates the first indication information and determines the first parameter may help all the nodes in the system determine a manner of obtaining the second service-related information. This overcomes a difficulty that may exist because communication is unreachable when the distributed node determines a manner in which the distributed node obtains the second service-related information.

In a possible example, the first indication information is service-related indication information or service-related information distribution indication information, the first parameter is an adjusted service association relationship, the second distributed node is an adjusted service neighboring node determined based on the adjusted service association relationship, the second service-related information on the second distributed node is service-related information on the adjusted service neighboring node, and the first service-related data is service-related information of the first distributed node and service-related information on a service neighboring node before adjustment.

In this embodiment of this application, the first distributed node sends the first service-related information and the communication link information to the central node, where the first service-related information is determined based on the service association relationship. In this case, after obtaining the first service-related information and the communication link information, the central node may adjust the service association relationship based on the current communication condition, to indicate the first distributed node to adjust the service neighboring node based on the adjusted service association relationship, and obtain the service-related information from the adjusted service neighboring node to perform the service model inference process, so that accuracy of a service model inference result is improved, thereby improving system performance.

In a possible example, the first indication information indicates the plurality of distributed nodes to adjust a communication parameter, the first parameter is an adjusted communication parameter of the first distributed node, the second service-related information is service-related data that is on a service neighboring node and that is obtained based on the adjusted communication parameter, the service neighboring node is determined based on the first service-related information, and the first service-related information is obtained based on the communication parameter before the adjustment.

In this embodiment of this application, after obtaining the first service-related information and the communication link information, the central node may adjust the communication parameter based on the current service association relationship, to indicate the first distributed node to perform communication based on the adjusted communication parameter, and obtain the service-related information from the service neighboring node based on the adjusted communication parameter to perform the service model inference process, so that quality of the obtained service-related information can be ensured, and accuracy of a service model inference result is improved, thereby improving system performance.

In a possible example, the determining first indication information based on the communication link information and the first service-related information includes: determining a service association relationship between the plurality of distributed nodes based on the first service-related information; determining a communication connection relationship based on the communication link information; and adjusting the service association relationship between the plurality of distributed nodes based on the communication connection relationship, and determining the first indication information.

In a possible example, the determining first indication information based on the communication link information and the first service-related information includes: determining a communication parameter of the plurality of distributed nodes before adjustment based on the communication link information; determining a degree of service association between the plurality of distributed nodes based on the first service-related information, and determining adjusted communication parameter based on the degree of service association; and determining the first indication information based on the adjusted communication parameter.

In a possible example, the communication link information includes communication reachability information, a channel status, and/or an interference status between the first distributed node and another node other than the first distributed node in the plurality of distributed nodes, and the service-related information includes one or more of the following: service data, an intermediate result of service model inference, a service type, a data type, and a data distribution parameter.

According to a fifth aspect, a data processing method is provided. The method is applied to a first distributed device in a distributed node, the distributed node includes a central device and at least one distributed device, a service submodel is configured on the distributed device, a plurality of service submodels constitute a service model of the distributed node, and the method includes: The distributed devices send computing power information and communication link information to the central device; receive second indication information from the central device, where the second indication information is determined by the central device based on the communication link information and the computing power information that are sent by the plurality of distributed devices; determine a second parameter based on the second indication information; receive service-related information of a second distributed device based on the second parameter, where the second distributed device is one or more of other distributed devices than the first distributed device in the plurality of distributed device; and input an input parameter of the service submodel into the service submodel, to obtain an output parameter of the service submodel through inference, where the input parameter of the service submodel includes the service-related information.

In this embodiment of this application, the first distributed device sends the computing power information and the communication link information to the central device, where the computing power information is determined based on the software and hardware capabilities of the distributed devices and a computing power resource allocation status. In this case, after obtaining the computing power information and the communication link information, the central device generates the second indication information based on the computing power information and the communication link information, to indicate a manner in which the first distributed device obtains the service-related information of the second distributed device, so that pertinence of obtaining the service-related information is improved, and accuracy of a service model inference result is improved, thereby improving system performance. In addition, a process in which the central device generates the second indication information and determines the second parameter may help all the devices in the node determine the manner of obtaining the service-related information, so that a data processing amount of the distributed devices can be reduced, and a communication requirement of the distributed devices can be reduced (even if communication is unreachable, a communication connection relationship or a computing connection relationship between two distributed devices may alternatively be adjusted).

In a possible example, the second indication information is model segmentation indication information or computing power allocation indication information, the second parameter is an adjusted computing connection relationship, and the second distributed device is an adjusted computing power neighboring device that is determined based on the adjusted computing connection relationship and that has a computing connection relationship with the first distributed device.

In this embodiment of this application, the first distributed device sends the computing power information and the communication link information to the central device, where the computing power information is determined based on software and hardware capabilities of the distributed device and a computing power resource allocation status. In this case, after obtaining the computing power information and the communication link information, the central device may adjust the computing connection relationship based on a current communication condition, to indicate the first distributed device to adjust the computing power neighboring device based on the adjusted computing connection relationship, and obtain the service-related information from the adjusted computing power neighboring device to perform a service model inference process, so that accuracy of a service model inference result is improved, thereby improving system performance.

In a possible example, the second indication information indicates the plurality of distributed devices to adjust a communication parameter, the second parameter is an adjusted communication parameter of the first distributed device, and the receiving service-related information of a second distributed device based on the second parameter includes: receiving the service-related information of the second distributed device based on the adjusted communication parameter, where the second distributed device is a computing power neighboring device that is determined based on the computing power information and has a computing connection to the first distributed device.

In this embodiment of this application, after obtaining the computing power information and the communication link information, the central device may adjust the communication parameter based on the current computing connection relationship, to indicate the first distributed device to perform communication based on the adjusted communication parameter, and obtain the service-related information from the computing power neighboring device based on the adjusted communication parameter to perform the service model inference process, so that quality of the obtained service-related information can be ensured, and accuracy of a service model inference result is improved, thereby improving system performance.

In a possible example, the communication link information includes communication reachability information, a channel status, and/or an interference status between the first distributed node and another node other than the first distributed node in the plurality of distributed nodes, and the service-related information includes an inference output of the service submodel.

According to a sixth aspect, a data processing method is provided. The method is applied to a central device in a distributed node, the distributed node includes one central device and at least one distributed device, a service submodel is configured on the distributed device, a plurality of service submodels constitute a service model of the distributed node, and the method includes: receiving computing power information and communication link information that are sent by the plurality of distributed devices; determining second indication information based on the communication link information and the computing power information, where the second indication information is used by the plurality of distributed devices to determine a second parameter, so that a first distributed device in the plurality of distributed device receives service-related information from a second distributed device based on the second parameter; and sending the second indication information to the first distributed device.

In this embodiment of this application, the first distributed device sends the computing power information and the communication link information to the central device, where the computing power information is determined based on the software and hardware capabilities of the distributed devices and a computing power resource allocation status. In this case, after obtaining the computing power information and the communication link information, the central device generates the second indication information based on the computing power information and the communication link information, to indicate a manner in which the first distributed device obtains the service-related information of the second distributed device, so that pertinence of obtaining the service-related information is improved, and accuracy of a service model inference result is improved, thereby improving system performance. In addition, a process in which the central device generates the second indication information and determines the second parameter may help all the devices in the node determine a manner of obtaining the service-related information. This overcomes a difficulty that may exist because communication is unreachable when the distributed device determines a manner in which the distributed device obtains the service-related information.

In a possible example, the second indication information is model segmentation indication information or computing power allocation indication information, the second parameter is an adjusted computing connection relationship, and the second distributed device is an adjusted computing power neighboring device that is determined based on the adjusted computing connection relationship and that has a computing connection relationship with the first distributed device.

In this embodiment of this application, the first distributed device sends the computing power information and the communication link information to the central device, where the computing power information is determined based on software and hardware capabilities of the distributed device and a computing power resource allocation status. In this case, after obtaining the computing power information and the communication link information, the central device may adjust the computing connection relationship based on a current communication condition, to indicate the first distributed device to adjust the computing power neighboring device based on the adjusted computing connection relationship, and obtain the service-related information from the adjusted computing power neighboring device to perform a service model inference process, so that accuracy of a service model inference result is improved, thereby improving system performance.

In a possible example, the second indication information indicates the plurality of distributed devices to adjust a communication parameter, and the second parameter is an adjusted communication parameter of the first distributed device.

In this embodiment of this application, after obtaining the computing power information and the communication link information, the central device may adjust the communication parameter based on the current computing connection relationship, to indicate the first distributed device to perform communication based on the adjusted communication parameter, and obtain the service-related information from the computing power neighboring device based on the adjusted communication parameter to perform the service model inference process, so that quality of the obtained service-related information can be ensured, and accuracy of a service model inference result is improved, thereby improving system performance.

In a possible example, the determining second indication information based on the communication link information and the computing power information includes: determining a computing connection relationship of the first distributed device based on the computing power information; determining a communication connection relationship of the first distributed device based on the communication link information; and obtaining an adjusted computing connection relationship based on the communication connection relationship, and determining the second indication information.

In a possible example, the determining second indication information based on the communication link information and the computing power information includes: determining a communication parameter of the first distributed device before adjustment based on the communication link information; determining a computing connection relationship of the first distributed device based on the computing power information; determining an adjusted communication parameter of the first distributed device based on the computing connection relationship; and determining the second indication information based on the adjusted communication parameter.

According to a seventh aspect, a communication apparatus is provided. The apparatus is used in a first distributed node in a distributed learning system, the distributed learning system includes a plurality of distributed nodes, communication models and service models are configured on the distributed nodes, and the apparatus includes: an obtaining module, configured to obtain an input parameter of the service model, where the input parameter of the service model includes an output parameter of the communication model, and the output parameter of the communication model is used to represent a communication connection status and/or communication connection quality between the plurality of distributed nodes; and a processing module, configured to input the input parameter of the service model into the service model, to obtain an output parameter of the service submodel.

In a possible example, the input parameter of the service model further includes local service-related information of the first distributed node and service-related information of a service neighboring node, where the service neighboring node is a distributed node in the plurality of distributed nodes that has service association with the first distributed node.

In a possible example, that the input parameter of the service model further includes local service-related information of the first distributed node and service-related information of a service neighboring node includes:

When the service model is at an $i^{th}$ layer, service-related information of a service neighboring node included in an input parameter of the service model is an output parameter obtained by an $(i-1)^{th}$ layer of a service model on the service neighboring node through inference; and when i = 1, the service-related information of the service neighboring node included in the input parameter of the service model is service-related information that is on the service neighboring node and that is obtained without model inference, where $1 \le i \le L$, and L is a total quantity of layers of the service model.

In a possible example, the output parameter of the communication model is obtained by inputting local communication link information of the first distributed node and communication link information of a communication neighboring node into the communication model on the first distributed node for inference, where the communication neighboring node is a distributed node in the plurality of distributed nodes and has a communication connection relationship with the first distributed node.

In a possible example, the communication link information includes communication reachability information, a channel status, and/or an interference status between the first distributed node and the communication neighboring node.

In a possible example, the service-related information and/or the service-related information that is obtained without model inference includes one or more of the following: service data, an intermediate result of service model inference, a service type, a data type, and a data distribution parameter.

In a possible example, the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a protocol layer corresponding to service content.

In a possible example, that the service subsystem is deployed at a protocol layer corresponding to service content includes: When the service model is an image classification model or a natural language processing model, the service subsystem is deployed at an application layer based on the service content; or when the service model is a radio resource management decision model, the service subsystem is deployed at a media access control layer based on the service content.

According to an eighth aspect, an electronic apparatus is provided. The apparatus is used in a first distributed node in a distributed learning system, the distributed learning system includes a plurality of distributed nodes, communication models and service models are configured on the first distributed nodes, and the apparatus includes: a first obtaining module, configured to obtain an input parameter of the communication model, where the input parameter of the communication model includes a first output parameter of the service model, and the first output parameter is used to represent a degree of service association between the first distributed nodes; a first processing module, configured to input the input parameter of the communication model into the communication model, to obtain an output parameter of the communication model, where the first processing module is further configured to adjust a communication parameter of the first distributed nodes based on the output parameter of the communication model; a second obtaining module, configured to obtain an input parameter of the service model, where the input parameter of the service model includes local service-related information of the first distributed node and first service-related information of a service neighboring node, the first service-related information of the service neighboring node is obtained from the service neighboring node based on the adjusted communication parameter, and the service neighboring node is a distributed node that has service association with the first distributed node; and a second processing module, configured to input the input parameter of the service model into the service model, to obtain a second output parameter of the service submodel.

In a possible example, the input parameter of the communication model further includes local communication link information of the first distributed node and communication link information of a communication neighboring node, and the communication neighboring node is a distributed node in the plurality of distributed nodes that has a communication connection relationship with the first distributed node.

In a possible example, the first output parameter of the service model is obtained by inputting the local service-related information of the first distributed node and second service-related information of the service neighboring node into the service model on the first distributed node for inference, and the second service-related information of the service neighboring node is obtained from the service neighboring node based on the communication parameter before the adjustment.

In a possible example, the communication link information includes communication reachability information, a channel status, and/or an interference status between the first distributed node and another node other than the first distributed node in the plurality of distributed nodes, the service-related information includes one or more of the following: service data, an intermediate result of service model inference, a service type, a data type, and a data distribution parameter, and the service-related information includes the first service-related information and the second service-related information.

In a possible example, the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a corresponding protocol layer based on service content.

In a possible example, that the service subsystem is deployed at a protocol layer corresponding to service content includes: When the service model is an image classification model or a natural language processing model, the service subsystem is deployed at an application layer based on the service content; or when the service model is a radio resource management decision model, the service subsystem is deployed at a media access control layer based on the service content.

According to a ninth aspect, an electronic apparatus is provided. The apparatus is used in a first distributed node in a distributed learning system, the distributed learning system includes a central node and a plurality of distributed nodes, communication models and service models are configured on the distributed nodes, and the apparatus includes: a sending module, configured to send first service-related information and communication link information to the central node; a receiving module, configured to receive first indication information from the central node, where the first indication information is determined by the central node based on the communication link information and the first service-related information that are sent by the plurality of distributed nodes; and a processing module, configured to: determine a first parameter based on the first indication information; receive second service-related information of a second distributed node based on the first parameter, where the second distributed node is one or more of distributed nodes other than the first distributed node in the plurality of distributed nodes; and input an input parameter of the service model into the service model, to obtain an output parameter of the service model through inference, where the input parameter of the service model includes the second service-related information.

In a possible example, the first indication information indicates the plurality of distributed nodes to adjust a communication parameter, the first parameter is an adjusted communication parameter of the first distributed node, and the determining a first parameter based on the first indication information includes: inputting the input parameter of the service model into the service model to obtain a first output parameter, where the input parameter of the service model includes the first service-related information, and the first output parameter is used to represent a degree of service association between the first distributed node and another distributed node; and inputting an input parameter of the communication model into the communication model to obtain a second output parameter, and obtaining an adjusted communication parameter based on the second output parameter, where the second service-related information is service-related data that is on a service neighboring node and that is obtained based on the adjusted communication parameter, the service neighboring node is determined based on the first service-related information, and the first service-related information is service-related data that is on the service neighboring node and that is obtained based on the communication parameter before the adjustment.

In a possible example, the first indication information is service-related indication information or service-related information distribution indication information, the first parameter is an adjusted service association relationship, the second distributed node is an adjusted service neighboring node determined based on the adjusted service association relationship, the second service-related information on the second distributed node is service-related information on the adjusted service neighboring node, and the first service-related information is service-related information of the first distributed node and service-related information on a service neighboring node before adjustment.

In a possible example, the communication link information includes communication reachability information, a channel status, and/or an interference status between the first distributed node and another node other than the first distributed node in the plurality of distributed nodes, and the service-related information includes one or more of the following: service data, an intermediate result of service model inference, a service type, a data type, and a data distribution parameter.

In a possible example, the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a corresponding protocol layer based on service content.

In a possible example, that the service subsystem is deployed at a protocol layer corresponding to service content includes: When the service model is any layer of an image classification model or a natural language processing model, the service subsystem is deployed at an application layer based on the service content; or when the service model is any layer of a radio resource management decision model, the service subsystem is deployed at a media access control layer based on the service content.

According to a tenth aspect, an electronic apparatus is provided. The apparatus is used in a central node in a distributed learning system, the distributed learning system includes one central node and a plurality of distributed nodes, communication models and service models are configured on the distributed nodes, and the method includes: a receiving module, configured to receive first service-related information and communication link information that are sent by the plurality of distributed nodes; a processing module, configured to determine first indication information based on the communication link information and the first service-related information, where the first indication information is used by the plurality of distributed nodes to determine a first parameter, so that a first distributed node in the plurality of distributed nodes receives second service-related information from a second distributed node based on the first parameter; and a sending module, configured to send the first indication information to the first distributed node.

In a possible example, the first indication information is service-related indication information or service-related information distribution indication information, the first parameter is an adjusted service association relationship, the second distributed node is an adjusted service neighboring node determined based on the adjusted service association relationship, the second service-related information on the second distributed node is service-related information on the adjusted service neighboring node, and the first service-related data is service-related information of the first distributed node and service-related information on a service neighboring node before adjustment.

In a possible example, the first indication information indicates the plurality of distributed nodes to adjust a communication parameter, the first parameter is an adjusted communication parameter of the first distributed node, the second service-related information is service-related data that is on a service neighboring node and that is obtained based on the adjusted communication parameter, the service neighboring node is determined based on the first service-related information, and the first service-related information is obtained based on the communication parameter before the adjustment.

In a possible example, the determining first indication information based on the communication link information and the first service-related information includes: determining a service association relationship between the plurality of distributed nodes based on the first service-related information; determining a communication connection relationship based on the communication link information; and adjusting the service association relationship between the plurality of distributed nodes based on the communication connection relationship, and determining the first indication information.

In a possible example, the determining first indication information based on the communication link information and the first service-related information includes: determining a communication parameter of the plurality of distributed nodes before adjustment based on the communication link information; determining a degree of service association between the plurality of distributed nodes based on the first service-related information, and determining adjusted communication parameter based on the degree of service association; and determining the first indication information based on the adjusted communication parameter.

In a possible example, the communication link information includes communication reachability information, a channel status, and/or an interference status between the first distributed node and another node other than the first distributed node in the plurality of distributed nodes, and the service-related information includes one or more of the following: service data, an intermediate result of service model inference, a service type, a data type, and a data distribution parameter.

According to an eleventh aspect, an electronic apparatus is provided. The apparatus is used in a first distributed device in a distributed node, the distributed node includes a central device and at least one distributed device, a service submodel is configured on the distributed device, a plurality of service submodels constitute a service model of the distributed node, and the apparatus includes: a sending module, configured to send computing power information and communication link information to the central device; a receiving module, configured to receive first indication information from the central device, where the first indication information is determined by the central device based on the communication link information and the computing power information that are sent by the plurality of distributed devices; and a processing module, configured to: determine a first parameter based on the first indication information; receive service-related information of a second distributed device based on the first parameter, where the second distributed device is one or more of distributed nodes other than the first distributed node in the plurality of distributed device; and input an input parameter of the service model into the service submodel, to obtain an output parameter of the service submodel through inference, where the input parameter of the service submodel includes the service-related information.

In a possible example, the first indication information is model segmentation indication information or computing power allocation indication information, the first parameter is an adjusted computing connection relationship, and the second distributed device is an adjusted computing power neighboring device that is determined based on the adjusted computing connection relationship and that has a computing connection relationship with the first distributed device.

In a possible example, the first indication information indicates the plurality of distributed devices to adjust a communication parameter, the first parameter is an adjusted communication parameter of the first distributed device, and the receiving service-related information of a second distributed device based on the first parameter includes: receiving the service-related information of the second distributed device based on the adjusted communication parameter, where the second distributed device is a computing power neighboring device that is determined based on the computing power information and has a computing connection to the first distributed device.

In a possible example, the communication link information includes communication reachability information, a channel status, and/or an interference status between the first distributed device and another device other than the first distributed device in the plurality of distributed devices, and service-related information includes an inference output of a service submodel.

According to a twelfth aspect, an electronic apparatus is provided. The apparatus is used in a central device in a distributed node, the distributed node includes one central device and at least one distributed device, a service submodel is configured on the distributed device, a plurality of service submodels constitute a service model of the distributed node, and the apparatus further includes: receiving computing power information and communication link information that are sent by the plurality of distributed devices; determining first indication information based on the communication link information and the computing power information, where the first indication information is used by the plurality of distributed devices to determine a first parameter, so that a first distributed device in the plurality of distributed device receives service-related information from a second distributed device based on the first parameter; and sending the first indication information to the first distributed device.

In a possible example, the first indication information is model segmentation indication information or computing power allocation indication information, the first parameter is an adjusted computing connection relationship, and the second distributed device is an adjusted computing power neighboring device that is determined based on the adjusted computing connection relationship and that has a computing connection relationship with the first distributed device.

In a possible example, the first indication information indicates the plurality of distributed devices to adjust a communication parameter, and the first parameter is an adjusted communication parameter of the first distributed device.

In a possible example, the determining first indication information based on the communication link information and the computing power information includes: determining a computing connection relationship of the first distributed device based on the computing power information; determining a communication connection relationship of the first distributed device based on the communication link information; and obtaining an adjusted computing connection relationship based on the communication connection relationship, and determining the first indication information.

In a possible example, the determining first indication information based on the communication link information and the computing power information includes: determining a communication parameter of the first distributed device before adjustment based on the communication link information; determining a computing connection relationship of the first distributed device based on the computing power information; determining an adjusted communication parameter of the first distributed device based on the computing connection relationship; and determining the first indication information based on the adjusted communication parameter.

According to a thirteenth aspect, an embodiment of this application provides a communication apparatus. The apparatus includes a communication interface and at least one processor. The communication interface is used by the apparatus to communicate with another device, for example, to obtain service-related information from a service neighboring node as an input parameter of a service model. For example, the communication interface may be a transceiver, a circuit, a bus, a module, or another type of communication interface, and the another device may be another distributed node. The at least one processor is configured to invoke a group of programs, instructions, or data to perform the method according to the first aspect or the second aspect. The apparatus may further include a memory, configured to store the programs, the instructions, or the data invoked by the processor. The memory is coupled to the at least one processor. When executing the instructions or the data stored in the memory, the at least one processor may implement the method according to the first aspect or the second aspect.

According to a fourteenth aspect, an embodiment of this application further provides a communication apparatus. The communication apparatus includes a communication interface and at least one processor. The communication interface is used by the apparatus to communicate with another device, for example, to send first service-related information and communication link information to a central node. For example, the communication interface may be a transceiver, a circuit, a bus, a module, or another type of communication interface, and the another device may be another central node. The at least one processor is configured to invoke a group of programs, instructions, or data, to perform the method according to the third aspect or the fourth aspect. The apparatus may further include a memory, configured to store the programs, the instructions, or the data invoked by the processor. The memory is coupled to the at least one processor. When executing the instructions or the data stored in the memory, the at least one processor may implement the method according to the third aspect or the fifth aspect.

According to a fifteenth aspect, an embodiment of this application further provides a communication apparatus. The communication apparatus includes a communication interface and at least one processor. The communication interface is used by the apparatus to communicate with another device, for example, to receive first service-related information and communication link information that are sent by a plurality of distributed nodes. For example, the communication interface may be a transceiver, a circuit, a bus, a transceiver module, or another type of communication interface, and the another device may be a distributed node. The at least one processor is configured to invoke a group of programs, instructions, or data, to perform the method according to the third aspect or the fourth aspect. The apparatus may further include a memory, configured to store the programs, the instructions, or the data invoked by the processor. The memory is coupled to the at least one processor. When executing the instructions or the data stored in the memory the at least one processor may implement the method according to the fourth aspect or the sixth aspect.

According to a sixteenth aspect, an embodiment of this application further provides a computer-readable storage medium, where the computer-readable storage medium stores instructions, and when the instructions are run on a computer, the computer is enabled to perform the method in any one of the first aspect to the sixth aspect or the possible implementations of the first aspect to the sixth aspect.

According to a seventeenth aspect, an embodiment of this application provides a chip system. The chip system includes a processor, may further include a memory, and is configured to implement the method in any one of the first aspect to the sixth aspect or the possible implementations of the first aspect to the sixth aspect. The chip system may include a chip, or may include a chip and another discrete device.

According to an eighteenth aspect, an embodiment of this application further provides a computer program product, including instructions. When the instructions are run on a computer, the computer is enabled to perform the method in any one of the possible implementations of the first aspect to the sixth aspect.

According to a nineteenth aspect, an embodiment of this application further provides a computer program. When the computer program is run on a computer, the method in any one of the possible implementations of the first aspect to the sixth aspect is performed.

According to a twentieth aspect, an embodiment of this application further provides a communication system. The communication system may include the electronic apparatuses provided in the third aspect and the fourth aspect, or the communication system may include the electronic apparatuses provided in the fifth aspect and the sixth aspect.

## BRIEF DESCRIPTION OF DRAWINGS

To describe technical solutions of embodiments of this application more clearly, the following briefly describes the accompanying drawings requiring for describing the embodiments.

FIG. 1A is a schematic diagram of a wireless communication system according to an embodiment of this application;

FIG. 1B is a schematic diagram of a hierarchical structure of a graph neural network according to an embodiment of this application;

FIG. 1C is a schematic diagram of a communication connection graph according to an embodiment of this application;

FIG. 2A is a flowchart of a data processing method according to an embodiment of this application;

FIG. 2B is a schematic diagram of a distributed learning system according to an embodiment of this application;

FIG. 2C is a diagram of a correspondence between a service association relationship and a communication connection relationship according to an embodiment of this application;

FIG. 2D is another diagram of a correspondence between a service association relationship and a communication connection relationship according to an embodiment of this application;

FIG. 2E is a schematic diagram of a service model inference process according to an embodiment of this application;

FIG. 3 is a flowchart of another data processing method according to an embodiment of this application;

FIG. 4A is a schematic interaction diagram of another data processing method according to an embodiment of this application;

FIG. 4B is a schematic diagram of a distributed learning system according to an embodiment of this application;

FIG. 4C is a schematic diagram of a process of generating first indication information according to an embodiment of this application;

FIG. 5A is a schematic interaction diagram of another data processing method according to an embodiment of this application;

FIG. 5B is a schematic diagram of a distributed learning system according to an embodiment of this application;

FIG. 5C is a schematic diagram of a process of generating second indication information according to an embodiment of this application;

FIG. 6 is a structural block diagram of an electronic apparatus according to an embodiment of this application;

FIG. 7 is a structural block diagram of an electronic apparatus according to an embodiment of this application; and

FIG. 8 is a schematic diagram of a structure of an electronic apparatus according to an embodiment of this application.

## DESCRIPTION OF EMBODIMENTS

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or modules is not limited to the listed steps or modules, but optionally further includes an unlisted step or module, or optionally further includes another inherent step or module of the process, the method, the product, or the device.

Mentioning an "embodiment" in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of" refers to two or more than two. "And/or" describes an association relationship between associated objects and indicates that three relationships may exist. For example, A and/or B may indicate the following three cases: Only A exists, both A and B exist, and only B exists. The character "/" usually indicates an "or" relationship between the associated objects.

The following first describes an application scenario in embodiments of this application.

Embodiments of this application may be applied to a wireless communication system such as 5G, satellite communication, or a wireless sensor network. It should be noted that the wireless communication system mentioned in the solutions of this application includes but is not limited to three application scenarios of a narrowband internet of things (Narrowband Internet of Things, NB-IoT) system, a long term evolution (Long Term Evolution, LTE) system, and a 5G mobile communication system: enhanced mobile broadband (enhanced Mobile Broadband, eMBB), massive machine-type communications (massive machine-type communications, mMTC), ultra-reliable low latency communication (ultra-reliable low latency communication, URLLC), and a communication system that may appear in future communication development. Embodiments of this application may be further applied to a wireless local area network (wireless local area network, WLAN) system, for example, a wireless fidelity (wireless-fidelity, Wi-Fi) system.

The technical solutions provided in this application may alternatively be applied to a machine type communication (machine type communication, MTC) network, a long term evolution-machine type communication technology (long term evolution-machine, LTE-M) network, a device-to-device (device-to-device, D2D) network, a machine to machine (machine to machine, M2M) network, an internet of things (internet of things, IoT) network, or another network. The IoT network may include, for example, an internet of vehicles. Communication manners in the internet of vehicles system are collectively referred to as vehicle-to-everything (vehicle-to-everything, V2X, where X may represent any thing). For example, V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

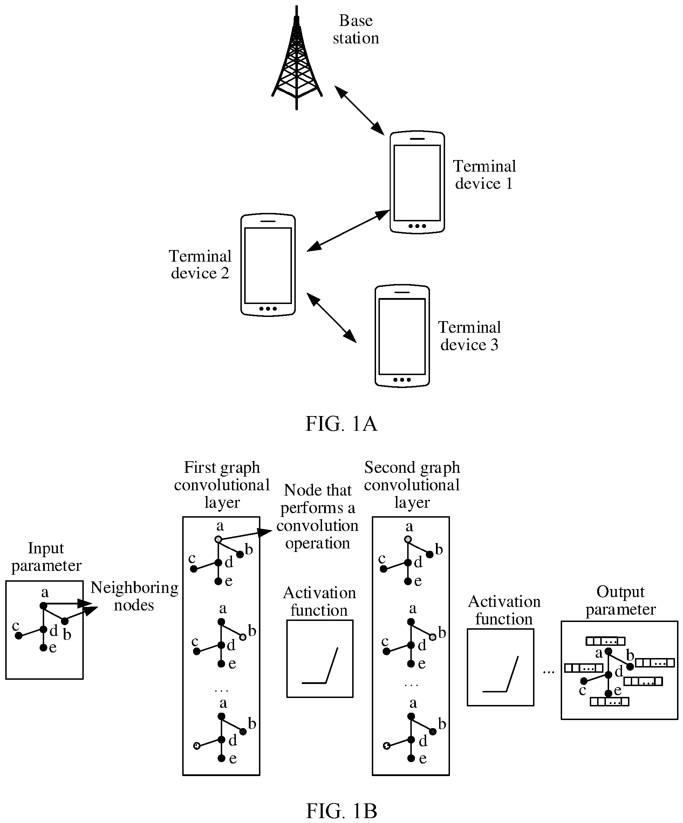

FIG. 1A is a schematic diagram of a wireless communication system according to an embodiment of this application. As shown in FIG. 1A, the communication system includes a plurality of distributed devices, which jointly form a distributed learning system. The plurality of distributed devices may be network devices such as base stations, or may be various types of terminal devices. The distributed device may collect a data sample by using a data collection module of the distributed device, and the collected sample is used to train a machine learning model to complete a given machine learning task. To complete the machine learning task, a plurality of distributed devices may need to perform information exchange, and exchanged content may include local data, and an intermediate result and/or a final result of local inference that are collected by each distributed device. This information exchange needs to be completed through wireless communication. Therefore, performance of the wireless communication affects a completion status of the machine learning task.

In the foregoing descriptions, the network device is an apparatus that is deployed in a radio access network and that provides a wireless communication function for the terminal device. The network device may be a next generation NodeB (next generation NodeB, gNB), a next generation evolved base station (next generation evolved NodeB, ng-eNB) (which may be referred to as an eNB for short), a network device in future 6G communication, or the like. The network device may be any device having a wireless transceiver function, and includes but is not limited to the base station. The base station may alternatively be a base station in a future communication system such as a 6th generation communication system. Optionally, the network device may be an access node, a wireless relay node, a wireless backhaul node, or the like in a wireless local area network (wireless fidelity, Wi-Fi) system. Optionally, the network device may be a radio controller in a cloud radio access network (cloud radio access network, CRAN) scenario. Optionally, the network device may be a wearable device, an in-vehicle device, or the like. Optionally, the network device may alternatively be a small cell, a transmission reception point (transmission reception point, TRP) (or may also be referred to as a transmission point or a receiving point), or the like. It may be understood that the network device may alternatively be a base station or the like in a future evolved public land mobile network (public land mobile network, PLMN).

For example, the terminal device may also be referred to as user equipment (user equipment, UE), a terminal, or the like. The terminal device is a device having a wireless transceiver function, and may be deployed on land, including an indoor or outdoor device, a handheld device, a wearable device, or an in-vehicle device; or may be deployed on water, for example, on a ship; or may be deployed in the air, for example, on a plane, a balloon, or a satellite. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medicine (remote medicine), a wireless terminal in a smart grid (smart grid), a wireless terminal in transportation safety (transportation safety), a wireless terminal in a smart city (smart city), a wireless terminal in a smart home (smart home), or the like. It may be understood that the terminal device may alternatively be a terminal device in a future 6G network, a terminal device in a future evolved PLMN, or the like.

Based on further descriptions of content described in the background, in the distributed learning system based on the wireless communication, an artificial neural network model may be used as a learning model on each distributed node, and performs model inference on an input parameter to obtain an output result, so that a function of the model, for example, image classification, prediction and estimation, or pattern recognition is implemented. This distributed learning system based on an artificial neural network can be used for training and inference through a GNN.

FIG. 1B is a schematic diagram of a hierarchical structure of a GNN according to an embodiment of this application. As shown in FIG. 1B, similar to a conventional neural network structure, the hierarchical structure is also reserved in a graph neural network structure, and this objective is to map high-dimensional graph data to low-dimensional vector space. Specifically, the GNN uses graph data G (V, E) as an input, and outputs a p-dimensional vector representation of a graph, a node, an edge, or a subgraph, that is, outputs $\mu \in R^p$, where $R^p$ is a p-dimensional vector of the graph, the node, the edge, or the subgraph. A graph convolution operation is included at each layer. Similar to a conventional convolution operation, the graph convolution operation is essentially a process of aggregating neighboring node (neighboring node) information:

$$\mu_v^{(k)} = \text{Agg}^{(k)}(\mathbf{x}_v, \mu_{N(v)}^{(k-1)}; \theta) \quad (1)$$

k represents a $k^{th}$ convolutional layer, $1 \le k \le L$, L is a total quantity of layers of the neural network structure, L is a positive integer, $\mathbf{x}_v$ represents a feature of a node v, and $\mu_v^{(k)}$ represents an output result of the $k^{th}$ layer of the node v; $\mu_{N(v)}^{(k-1)}$ represents a hidden status of an upper layer of a neighboring node; $\text{Agg}^{(k)} (\cdot, \cdot; \theta)$ represents an aggregate function of the $k^{th}$ layer, and is shared by all the nodes; and $\theta$ is a parameter to be trained. Through a multi-layer graph convolution operation, the node can continuously aggregate neighboring node information based on a topology structure, to update a status of the node. The foregoing operation may be completed in a distributed manner. To be specific, it depends only on information exchange between the adjacent nodes, and support of a central server is not needed. Alternatively, a central node may participate in data distribution or an indication about obtaining data, to complete information exchange between the nodes.

It should be noted that the "node" described in this embodiment of this application is a main body used to independently perform a neural network model inference process. One node may correspond to one device. However, in some cases, a plurality of devices may jointly complete the neural network model inference process. Therefore, one node may alternatively correspond to a plurality of devices, and the plurality of devices jointly form the "node" in functional logic.

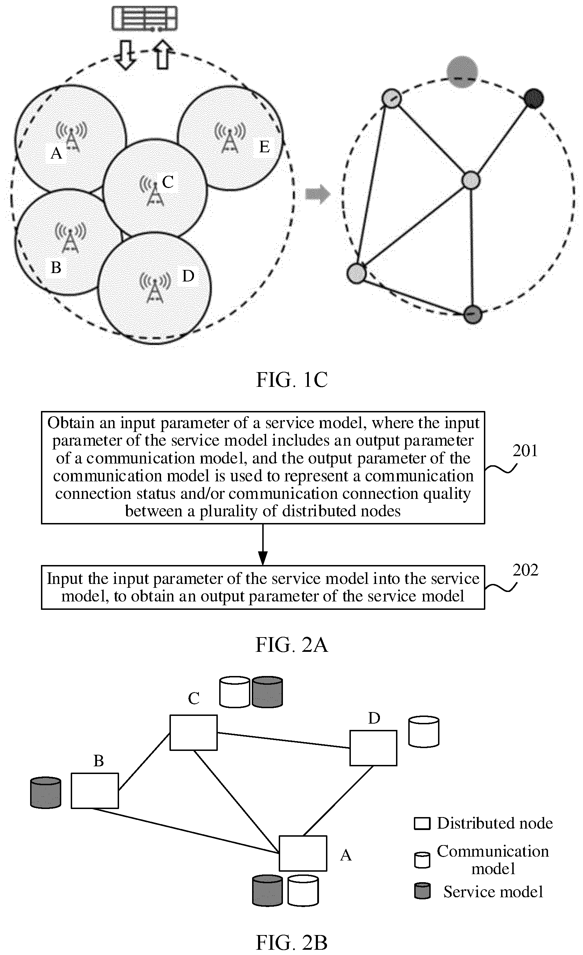

In the GNN, the information needs to be obtained from the neighboring nodes to update the own status. Therefore, construction of a graph (a topology graph) is a very important process. The graph is used to represent a connection relationship between nodes in a distributed learning system, for example, may include a communication connection graph, a service association graph, and a computing connection graph. The communication connection graph is used as an example. FIG. 1C is a schematic diagram of a communication connection graph according to an embodiment of this application. A communication device is used as a node in the graph, and a connection between the nodes is used as an edge of the graph. Communication reachability is usually considered for the connection between the nodes. For example, in FIG. 1C, if communication between a node A and a node C is reachable, there is an edge between the node A and the node C when the graph is constructed. However, if the node A and the node E cannot directly communicate with each other, there is no edge between the node A and a node E when the graph is constructed.

In a conventional GNN processing process, it only corresponds to one graph. A node connection relationship in the graph indicates that there is a requirement for information exchange (a service association) between the nodes. Actually, by default, communication between two nodes connected by using one edge is reachable. However, in an actual GNN application scenario, service association between the nodes is usually inconsistent with communication connectivity between the nodes, and system performance cannot be optimized by simply using a graph to perform GNN training and inference.

Based on this, an embodiment of this application provides a data processing method. Refer to FIG. 2A. The method includes the following steps.

201: Obtain an input parameter of a service model, where the input parameter of the service model includes an output parameter of a communication model, and the output parameter of the communication model is used to represent a communication connection status and/or communication connection quality between a plurality of distributed nodes.

202: Input the input parameter of the service model into the service model, to obtain an output parameter of the service model.

The method in this embodiment of this application is applied to a first distributed node in a distributed learning system. The distributed learning system includes the plurality of distributed nodes, and the communication models and the service models are configured on the distributed nodes. The model corresponds to a neural network model or an algorithm process.

For details, refer to FIG. 2B. FIG. 2B is a schematic diagram of a distributed learning system according to an embodiment of this application. As shown in FIG. 2B, a distributed node A, a distributed node B, a distributed node C, and a distributed node D form the distributed learning system, where service models are configured on some nodes, to perform inference and learning of service-related information, for example, to perform inference based on local service-related information of the node and service-related information obtained by the node from a neighboring node, to obtain a classification result, a pattern recognition result, or a prediction estimation result.

In addition, communication models are further configured on some nodes provided in this embodiment of this application. The communication model is used to perform inference and learning of communication-related information, for example, to perform inference based on local communication link information of the node and communication link information obtained by the node from the neighboring node, to obtain communication connection quality between the node and the neighboring node.

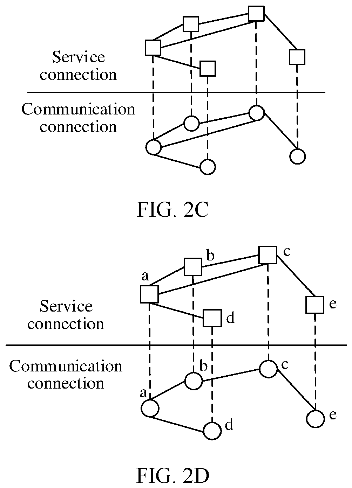

A connection relationship in FIG. 2B may indicate communication reachability, or may indicate service association, or indicate both communication reachability and service association. Assuming that the communication reachability is consistent with the service association, a connection relationship in the graph used for service model inference is the same as that in the graph used for communication model inference. For details, refer to FIG. 2C. FIG. 2C is a diagram of a correspondence between a service association relationship and a communication connection relationship according to an embodiment of this application. As shown in FIG. 2C, each edge in the service association relationship graph corresponds to each edge in the communication connection relationship graph.

However, actually, in many cases, communication reachability is inconsistent with service association, or communication connection quality affects obtaining, by a node, service-related information from a neighboring node. In other words, a connection relationship in a graph used for service model inference is different from that in a graph used for communication model inference. For details, refer to FIG. 2D. FIG. 2D is another diagram of a correspondence between a service association relationship and a communication connection relationship according to an embodiment of this application. As shown in FIG. 2D, if there is no edge that is in a communication connection relationship graph and that corresponds to an edge ac in a service association relationship graph, it indicates that although information exchange needs to be performed between a node a and a node c, communication between the node a and the node c is unreachable, or communication quality is poor. This severely affects information exchange quality.

In this case, when service-related information is obtained from a service neighboring node as an input parameter of a service model, it is affected by the communication connection relationship. However, if the input parameter of the service model is still obtained based on the service association relationship graph in a GNN processing process, accuracy of an output parameter of the service model cannot be ensured.

Based on this, in this embodiment of this application, in a process in which the service model on a first distributed node performs inference, an output parameter of a communication model is used as the input parameter of the service model. The output parameter of the communication model is used to represent a communication connection relationship between the first distributed node and another node, or communication connection quality between the first distributed node and another node, or a communication connection relationship and communication connection quality between the first distributed node and another node. The communication connection relationship indicates that there is a connection relationship between the first distributed node and the neighboring node, that is, communication is reachable; or indicates there is no connection relationship between the first distributed node and another node, that is, communication is unreachable. The communication connection quality indicates signal quality, an interference degree, or the like between the first distributed node and the neighboring node. The communication quality may be specifically represented by using parameters such as a signal-to-noise ratio, a throughput, and a bit error rate, and the interference degree may be represented by using parameters such as a signal-to-noise ratio and a transmission latency.

The output parameter of the communication model may be obtained by inputting local communication link information of the first distributed node and communication link information of a communication neighboring node into the communication model on the first distributed node for inference. In other words, the input parameter of the communication model may include the local communication link information of the first distributed node and the communication link information of the communication neighboring node. The communication neighboring node is a distributed node that has a communication connection relationship with the first distributed node in a plurality of distributed nodes. In other words, the communication neighboring node is a node that can communicate with the first distributed node. The communication link information may include communication reachability information, a channel status, and/or an interference status between the first distributed node and another node. The communication reachability information may include communication reachability or communication unavailability. The channel status is channel state information (channel state information, CSI), and may be used to describe a fading factor of a signal on each transmission path, for example, information such as signal scattering, environmental fading, and distance attenuation. The interference status refers to an impairment caused to receiving of a desired signal, for example, is a current transmission latency 190 us. The another node may be any node other than the first distributed node in the plurality of nodes, or may be only the communication neighboring node of the first distributed node.

The output parameters of the communication models are input into the service model. In a process in which the service model performs inference based on the input parameters, because the output parameters of the communication models affect the service association relationship of the first distributed node, a GNN processing process of the service model is affected, and an output parameter of the service model is affected.

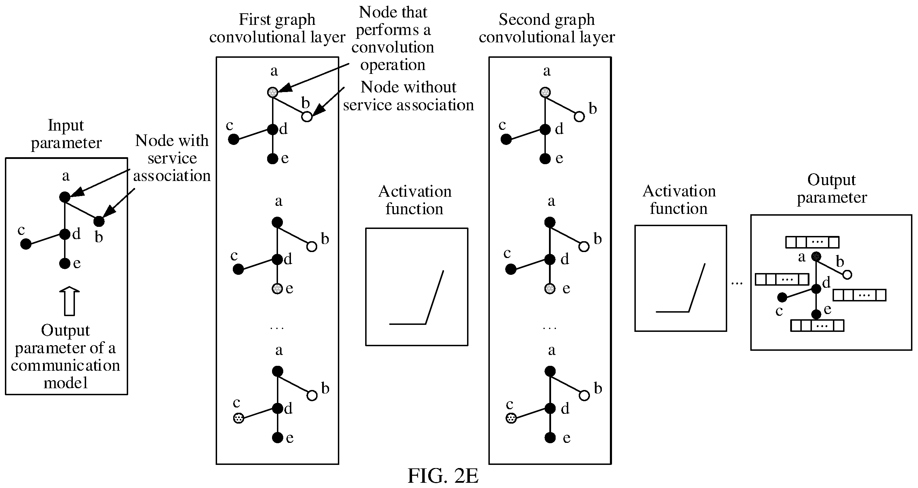

For details, refer to FIG. 2E. FIG. 2E is a schematic diagram of a service model inference process according to an embodiment of this application. As shown in FIG. 2E, an input parameter of a service model on a first distributed node includes local service-related information of the first distributed node and service-related information that is on a service neighboring node and that is obtained from the service neighboring node. The service neighboring node of the first distributed node is a distributed node that has a service association relationship with the first distributed node. Correspondingly, in FIG. 2E, assuming that the service model on the first distributed node is an image classification model, and needs to perform image classification on five distributed nodes: the first distributed node (namely, a distributed node d in FIG. 2E), a distributed node b, a distributed node c, a distributed node a, and a distributed node e, the distributed nodes a, b, c, and e are service neighboring nodes of the distributed node d. In addition, the input parameter of the service model further includes an output parameter of the communication model, and a GNN of the first distributed node is re-determined based on the output parameter of the communication model. That is, an original GNN includes a service association relationship between the five nodes a, b, c, d, and e. However, under impact of the output parameter of the communication model, the re-determined GNN includes only a service association relationship between the four nodes a, e, c, and d, and there is no communication connection relationship between the node b and the node d (communication is unreachable, or communication quality is too poor). As a result, the node b cannot perform service communication with the node d. That is, as shown in FIG. 2E, during a first-layer convolution operation, the node b is a node without service association with the node d. Therefore, service-related information actually input at a first graph convolutional layer includes only service-related information on four nodes: a, e, c, and d.

It should be noted that, it can be learned according to the foregoing Formula (1) that an output parameter of a $k^{th}$ convolutional layer is obtained through inference based on a hidden status of a $(k-1)^{th}$ layer of a neighboring node. In other words, when the first distributed node performs a GNN processing process at the $k^{th}$ layer, obtained service-related information of a service neighboring node is actually an output parameter of the $(k-1)^{th}$ layer of a service model on the service neighboring node. Therefore, at the initial input parameter (that is, the first graph convolutional layer), the first distributed node may consider impact of the output parameter of the communication model on the service neighboring node, and a plurality of subsequent graph convolutional layers continue to obtain service-related information at a second layer, a third layer, ..., and an $L^{th}$ layer based on the service neighboring node. L is a total quantity of graph convolutional layers, and L is a positive integer. When k = 1, the service-related information that is on the service neighboring node and that is obtained as an input parameter of the $k^{th}$ layer of the first distributed node is information that is not processed via the service model on the service neighboring node. Alternatively, when an output parameter of a $(k-1)^{th}$ layer of the service model on the service neighboring node is input to each $k^{th}$ graph convolutional layer of the service model as an input parameter, an output parameter of an $m^{th}$ layer of the communication model needs to be obtained as an input parameter of the service model, until processing of an $L^{th}$ layer of the service model is completed, to obtain an output parameter. The $m^{th}$ layer of the communication model and the $k^{th}$ layer of the service model may be a same convolutional layer, or may be different convolutional layers. The local service-related information of the first distributed node, the service-related information on the service neighboring node, and the output parameter of the $k^{th}$ layer of the service model may include one or more of service data, an intermediate result of service model inference, a service type, a data type, and a data distribution parameter, and may further include another parameter. For example, when the service model is an image classification model, the service data may be images that need to be classified, the intermediate result of the service model inference may be a "clean image" obtained after noise removal or invalid data cleaning is performed on the image, and the service type refers to type division performed based on different transactions that need to be processed. For example, the service type corresponding to the image classification model may be a "classification service", and the data type may be "image data". The data distribution parameter may refer to whether image data needed by the first distributed node is distributed on a current node. If the image data needed by the first distributed node is distributed on the current node, the current node may further include an amount of the image data, and the like. The following provides detailed descriptions by using an example in which the service model is an image classification model, a natural language processing model, or a radio resource management decision model.

When the service model is a first layer of the image classification model, service-related information is image data, and an output parameter of the service model is an inference output of the first layer of the image classification model; when the service model is a $k^{th}$ layer of the image classification model, service-related information is an output parameter of a $(k-1)^{th}$ layer of the image classification model, and an output parameter of the service model is an inference output of the $k^{th}$ layer of the image classification model, where $1 \leq k \leq L$, and L is an integer greater than or equal to 1; or when the service model is a last layer of the image classification model, service-related information is an output parameter of an upper layer of the image classification model, and an output parameter of the service model is an image type parameter.

When the service model is a first layer of the natural language processing model, service-related information is corpus data, and an output parameter of the service model is an inference output of the first layer of the natural language processing model; when the service model is an $L^{th}$ layer of the natural language processing model, service-related information is an output parameter of an $(L-1)^{th}$ layer of the natural language processing model, and an output parameter of the service model is an inference output of the $L^{th}$ layer of the natural language processing model, where L is an integer greater than 1; or when the service model is a last layer of the natural language processing model, service-related information is an output parameter of an upper layer of the natural language processing model, and an output parameter of the service model is a natural language processing result parameter, where the natural language processing result parameter may be, for example, a language translation result, a subsequent writing result, or a question-answering answer.

When the service model is a first layer of the radio resource management decision model, service-related information is wireless communication environment data, for example, may be a channel status, an interference status, scenario information, user behavior information, or traffic information, and an output parameter of the service model is an inference output of the first layer of the radio resource management decision model; when the service model is an $L^{th}$ layer of the radio resource management decision model, service-related information is an output parameter of an $(L-1)^{th}$ layer of the radio resource management decision model, and an output parameter of the service model is an inference output of the $L^{th}$ layer of the radio resource management decision model, where L is an integer greater than 1; or when the service model is a last layer of the radio resource management decision model, service-related information is an output parameter of an upper layer of the radio resource management decision model, and an output parameter of the service model is a radio resource management decision parameter, where the radio resource management decision parameter may be, for example, a radio resource allocation decision, an interference coordination decision, or the like.

In the foregoing process, the communication models on the plurality of distributed nodes constitute a communication subsystem, and the communication subsystem may be deployed at a physical layer (physical layer, PHY) or a media access control (media access control, MAC) layer. The service models on the plurality of distributed nodes constitute a service subsystem, and the service subsystem may be deployed at a protocol layer corresponding to service content. For example, when the service model is the image classification model or the natural language processing model, the service subsystem may be deployed at an application layer (application layer) or an application entity (application entity, AE); or when the service model is the radio resource management decision model, the service subsystem can be deployed at the media access control layer.

It can be learned that in this embodiment of this application, the output parameter of the communication model is used as the input parameter of the service model, and the output parameter of the communication model is used to represent the communication connection status and/or the communication connection quality between the plurality of distributed nodes. In this case, in a process in which the service model performs inference on service-related information by using the GNN, impact of a communication factor is comprehensively considered, so that accuracy of the output parameter of the service model is improved, thereby optimizing system performance.

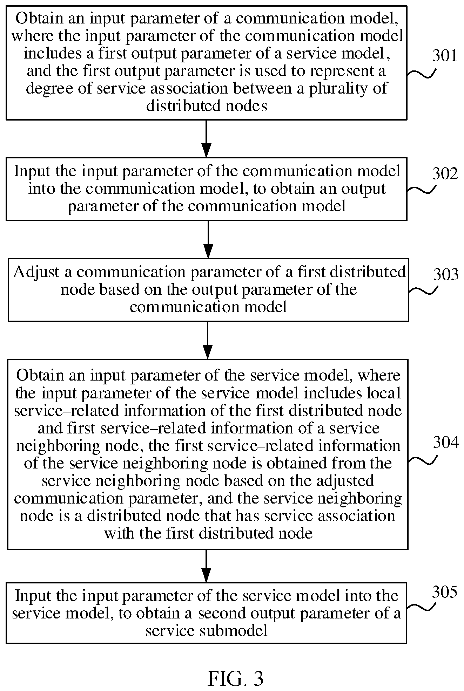

An embodiment of this application further provides another data processing method. Refer to FIG. 3. The method includes the following steps.

301: Obtain an input parameter of a communication model, where the input parameter of the communication model includes a first output parameter of a service model, and the first output parameter is used to represent a degree of service association between a plurality of distributed nodes.

302: Input the input parameter of the communication model into the communication model, to obtain an output parameter of the communication model.

303: Adjust a communication parameter of a first distributed node based on the output parameter of the communication model.

304: Obtain an input parameter of the service model, where the input parameter of the service model includes local service-related information of the first distributed node and first service-related information of a service neighboring node, the first service-related information of the service neighboring node is obtained from the service neighboring node based on the adjusted communication parameter, and the service neighboring node is a distributed node that has service association with the first distributed node.

305: Input the input parameter of the service model into the service model, to obtain a second output parameter of the service model.

The foregoing method is applied to the first distributed node in a distributed learning system. The distributed learning system includes a plurality of distributed nodes, and communication models and service models are configured on the plurality of distributed nodes. For details, refer to FIG. 2B and the corresponding descriptions. Details are not described herein again.

As described in the embodiment of steps 201 and 202, the service model is deployed on the distributed node, the service model may perform inference on service-related information based on a GNN, to obtain an output parameter, and output parameters of different service models may include different content. For example, an output parameter of a service model corresponding to an image classification model may be used to represent an image classification result; and an output parameter of a service model corresponding to a natural language processing model may be used to represent a language translation result. In addition, the output parameter of the service model may further indicate a degree of service association between the plurality of distributed nodes. The indication may be an implicit indication, or may be an explicit indication. For example, when the service model is a traffic flow model, the input parameter includes a traffic image 1 provided by the first distributed node, and further includes a traffic image 2 obtained from a distributed node 2 (a service neighboring node), and a traffic image 3 obtained from a distributed node 3 (a service neighboring node), and an inference result that the traffic flow model intends to obtain is a traffic volume of the first distributed node at 20:00. If the finally output traffic volume has a highest degree of association with the traffic image 1 provided by the first distributed node, a second highest degree of association with the traffic image 2 provided by the distributed node 2, and a lowest degree of association with the traffic image 3 provided by the distributed node 3, it may be determined that a degree of association between the distributed node 2 and the first distributed node is higher than a degree of association between the distributed node 3 and the first distributed node.

The communication model is further deployed on the distributed node. An input parameter of the communication model may include a local communication link parameter and a communication link parameter obtained from a communication neighboring node. The communication neighboring node is a distributed node that has a communication connection relationship with the first distributed node. An output parameter of the communication model may be used to represent a communication connection relationship and/or communication connection quality between the nodes. In addition, the output parameter of the communication model may further include a communication parameter of the distributed nodes. For example, an output parameter of a communication model on the first distributed node may include: a communication rate 0.2 M (bit/s) between the first distributed node and the distributed node 2, and a communication rate 10 M (bit/s) between the first distributed node and the distributed node 3.

In some cases, it is assumed that a degree of service association between the distributed nodes is very high, but communication efficiency is very low. For example, a degree of service association between the first distributed node and the distributed node 2 is high, but communication efficiency is only 0.2 M (bit/s), and is lower than minimum normal communication efficiency 1 M (bit/s). This may cause an excessively high latency or poor quality of the obtained traffic image 2 when the first distributed node obtains service-related data from the distributed node 2 based on the GNN, and is not conducive to a service model inference process.

In this case, the parameter between the distributed nodes may be adjusted. As described in step 301, the first output parameter of the service model is used as the input parameter of the communication model, and is input to the communication model together with an original input parameter of the communication model, for example, communication link information. In the output parameter obtained by the communication model, the communication parameter is an adjusted communication parameter based on the degree of service association. For example, the degree of service association between the first distributed node and the distributed node 2 is high, and the communication parameter of the first distributed node, for example, a modulation and coding scheme (modulation and coding scheme, MCS) level at which the first distributed node communicates with the distributed node 2, or a transmit power or a beamforming parameter of the first distributed node is adjusted, so that communication efficiency between the two is adjusted from 0.2 M (bit/s) to 50 M (bit/s), normal communication efficiency is achieved, and it is ensured that when the first distributed node obtains the service-related information on the service neighboring node based on the GNN, less time is consumed, and quality of the obtained service-related information is better.

After obtaining the adjusted communication parameter, the first distributed node may perform the service model inference process, to be specific, obtain the input parameter of the service model, including first service-related information of the first distributed node and first service-related information on the service neighboring node. If the first service-related information on the service neighboring node is obtained based on the adjusted communication parameter, accuracy of the output parameter obtained by the service model through inference based on the input parameter is higher.

It should be noted that, assuming that in the output parameters of the service model, an output parameter used to represent the degree of service association between the plurality of distributed nodes is the first output parameter, the first output parameter is obtained by the service model by inputting the local service-related information of the first distributed node and second service-related information of the service neighboring node into the service model on the first distributed node for inference, and the second service-related information of the service neighboring node is obtained from the service neighboring node based on the communication parameter before adjustment. In other words, the service-related information obtained from the service neighboring node based on different communication parameters is also different, and this difference causes a difference between the output parameters of the service model.

Similarly, the communication models on the plurality of distributed nodes constitute a communication subsystem, and the communication subsystem may be deployed at a physical layer or a media access control layer; and the service models on the plurality of distributed nodes constitute a service subsystem, and the service subsystem may be deployed at a corresponding protocol layer based on service content. Output parameters of the communication models on the distributed nodes have higher accuracy. Assuming that the output parameters of the plurality of distributed nodes are jointly applied to the service subsystem, learning performance of the service subsystem is significantly improved.

It can be learned that in this embodiment of this application, the first output parameter of the service model is used as the input parameter of the communication model, and the first output parameter of the service model is used to represent the degree of service association between the plurality of distributed nodes. In this way, the output parameter of the communication model on the distributed node is obtained based on impact of the degree of service association between the distributed nodes. In this case, the distributed node adjusts the communication parameter based on the output parameter of the communication model, and obtains the service-related information on the service neighboring node based on the adjusted communication parameter, so that quality of obtaining the service-related information is improved, and an inference effect of the service model is improved, thereby optimizing system performance.

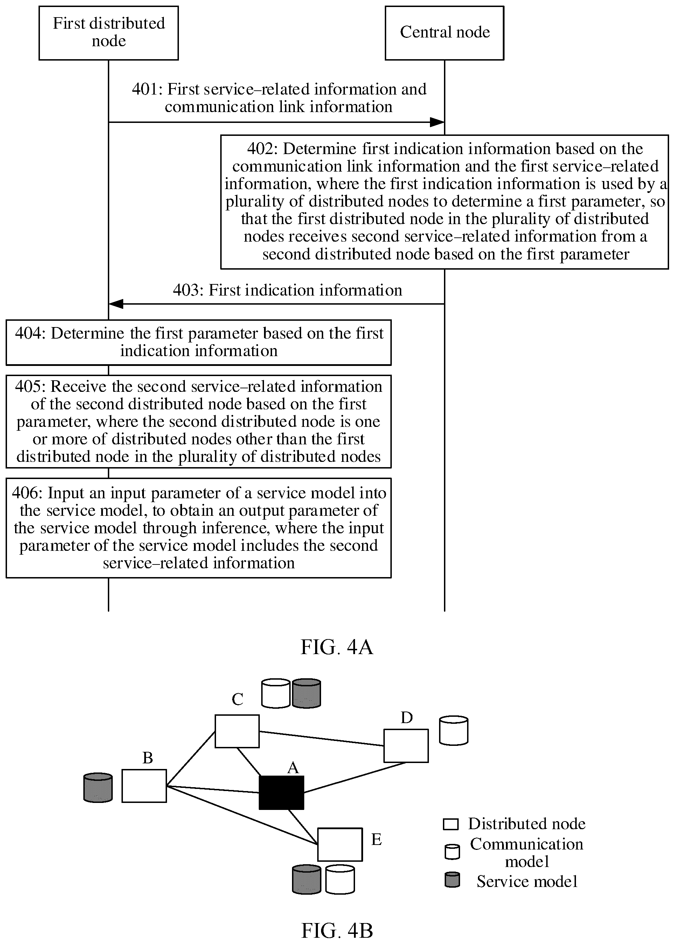

An embodiment of this application further provides another data processing method. Refer to FIG. 4A. The method includes the following steps.

401: A first distributed node sends a first service-related information and communication link information.

The method in this embodiment of this application is applied to the first distributed node in a distributed learning system. The distributed learning system includes one central node and a plurality of distributed nodes, and communication models and service models are configured on the distributed nodes.

For details, refer to FIG. 4B. An embodiment of this application provides a schematic diagram of a distributed learning system. As shown in FIG. 4B, a node A, a node B, a node C, a node D, and a node E form the distributed learning system. The node A is a central node, and the node B, the node C, the node D, and the node E are distributed nodes. Service models are configured on some distributed nodes, and are used to perform inference and learning of service-related information, for example, to obtain a classification result, a pattern recognition result, or a prediction estimation result through inference based on local service-related information of the nodes and service-related information obtained by the node from a neighboring node.

In addition, communication models are further configured on some distributed nodes provided in this embodiment of this application. The communication model is used to perform inference and learning of communication-related information, for example, to perform inference based on local communication link information of the node and communication link information obtained by the node from the neighboring node, to obtain communication connection quality between the node and the neighboring node. The communication link information includes communication reachability information, a channel status, and/or an interference status between the first distributed node and another distributed node, and the service-related information includes one or more of information such as service data, an intermediate result of service model inference, a service type, a data type, and a data distribution parameter. As shown in FIG. 4B, communication between each distributed node and the central node is reachable, and the communication reachability or service association, or both the communication reachability and service association may be implemented between the distributed nodes. The communication model and/or the service model may be included or may not be included on the central node A.

402: The central node receives first service-related information and communication link information that are sent by the plurality of distributed nodes, and determines first indication information based on the communication link information and the first service-related information, where the first indication information is used by the plurality of distributed nodes to determine a first parameter, so that the first distributed node in the plurality of distributed nodes receives second service-related information from a second distributed node based on the first parameter.

403: The central node sends the first indication information to the first distributed node.

404: The first distributed node receives the first indication information from the central node, and determines the first parameter based on the first indication information.

The central node in this embodiment of this application may receive the information sent by the distributed nodes, may perform processing based on the information, to generate processing results, and feed back the processing results to the distributed nodes. In this way, when the distributed nodes cannot communicate with each other, interaction may alternatively be completed by obtaining information via the central node.

The first service-related information and the communication link information that are sent by the plurality of distributed nodes and that are received by the central node may be used to determine the first indication information, and the first indication information indicates the distributed node to receive the second service-related information from the second distributed node based on the first parameter. That is, in a process in which the central node indicates the distributed node to obtain the second service-related information from the second distributed node, a process in which the service-related information and the communication link information affect each other is comprehensively considered, so that reasonableness of obtaining the second service-related information is improved.

Optionally, the first indication information is service-related indication information or service-related information distribution indication information, and the first parameter is an adjusted service association relationship.

Optionally, the determining first indication information based on the communication link information and the first service-related information includes: determining a service association relationship between the plurality of distributed nodes based on the first service-related information; determining a communication connection relationship based on the communication link information; and adjusting the service association relationship between the plurality of distributed nodes based on the communication connection relationship, and determining the first indication information.

Specifically, after receiving the first service-related information uploaded by the plurality of distributed nodes, the central node may determine the service association relationship between the plurality of distributed nodes based on the first service-related information. For example, the first service-related information uploaded by the first distributed node includes: performing image classification on images on the first distributed node, a distributed node 2, and a distributed node 3. It may be determined that the distributed node 2 and the distributed node 3 have a service association relationship with the first distributed node. Alternatively, when the service model is included on the central node, the service association relationship between the nodes may alternatively be determined by the central node by invoking the service model to perform inference.

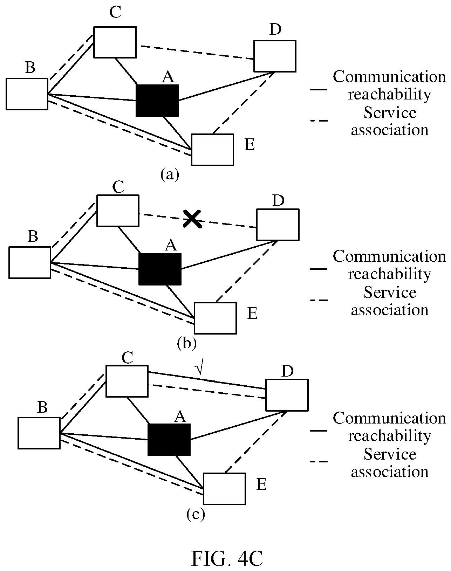

Similarly, after receiving the communication link information uploaded by the plurality of distributed nodes, the central node may determine the communication connection relationship and/or communication connection quality between the plurality of distributed nodes based on the communication link information. FIG. 4C is a schematic diagram of a process of generating first indication information according to an embodiment of this application. As shown in (a) in FIG. 4C, for example, a first distributed node is a node C. If communication link information uploaded by the node C to a central node A includes a communication rate 30 M (bit/s) between the node C and a node B, and a signal-to-noise ratio 60 decibels (dB), it indicates that there is a communication connection relationship between the two nodes, that is, communication is reachable. If an uploaded communication rate between the node C and a node D is 0.1 M (bit/s), and is lower than a normal communication rate (assuming that the normal communication rate is 1 M bit/s), it indicates that communication between the two nodes is unreachable. There is a service association relationship between the node C and the node D, but communication is unreachable. In a possible case, the service association relationship may be adjusted based on a current communication condition, to affect a process of obtaining service-related information.

First indication information generated by the central node may be service-related indication information or service-related information distribution indication information. The service-related indication information indicates whether there is service association between the first distributed node and another distributed node, and the service-related information distribution indication information indicates to distribute mutually associated service-related information to different nodes in a plurality of distributed nodes. For example, if determining, based on the communication link information, that there is a communication connection relationship between the first distributed node and a distributed node 2, the central node distributes service-related information with service association to the two nodes. After receiving the first indication information, the first distributed node adjusts the service-related information based on the first indication information, and determines a first parameter. The first parameter may be an adjusted service association relationship. As shown in (b) in FIG. 4C, if communication between the node C and the node D is unreachable, it may be considered that service interaction cannot be performed between the two nodes. That is, a service association relationship between the two nodes is adjusted from service association to no service association.

Optionally, the first indication information indicates the plurality of distributed nodes to adjust a communication parameter, and the first parameter is an adjusted communication parameter of the first distributed node.

Optionally, a communication parameter of the plurality of distributed nodes before the adjustment is determined based on the communication link information; a degree of service association between the plurality of distributed nodes is determined based on the first service-related information, and an adjusted communication parameter is determined based on the degree of service association; and the first indication information is determined based on the adjusted communication parameter.

There is a service association relationship between the node C and the node D, but communication is unreachable. In a possible case, the communication parameter may alternatively be adjusted based on the current service association relationship, to affect a process of obtaining service-related information.

The first indication information generated by the central node indicates the plurality of distributed nodes to adjust the communication parameter, or may further include how to specifically adjust the communication parameter. For example, the first indication information indicates the first distributed node to increase an MCS level at which the first distributed node communicates with the distributed node 2, and to increase a communication parameter such as a transmit power or a beamforming parameter of the first distributed node. After receiving the first indication information, the first distributed node adjusts the communication parameter based on the indication, to obtain the first parameter, namely, the adjusted communication parameter. For details, refer to (c) in FIG. 4C. After a transmit power of the node C is increased, if the communication rate between the node C and the node D changes from 0.1 M bit/s to 2 M bit/s (an adjusted parameter), and reaches a normal communication rate (assuming that the normal communication rate is 1 M bit/s), a communication connection relationship between the node C and the node D changes from communication unreachability to communication reachability.

405: The first distributed node receives the second service-related information of the second distributed node based on the first parameter, where the second distributed node is one or more of distributed nodes other than the first distributed node in the plurality of distributed nodes.

In the foregoing process, assuming that the service association relationship is adjusted based on the current communication condition, the first parameter is the adjusted service association relationship, and this may be reflected as an adjustment of a service association relationship graph, the second distributed node is an adjusted service neighboring node determined based on the adjusted service association relationship, the second service-related information of the second distributed node is service-related information on the adjusted service neighboring node, and first service-related data is the service-related information of the first distributed node and the service-related information on the service neighboring node before the adjustment.

Correspondingly, in FIG. 4C, when the first distributed node is the node C, and sends the first service-related information to the central node, the first service-related information is local service-related information of the node C and service-related information on service neighboring nodes before the adjustment, such as the node B and the node C shown in (a) in FIG. 4C. When receiving the second service-related information of the second distributed node based on the first parameter, as shown in (b) in FIG. 4C, the first distributed node receives the service-related information only from the node B, and does not receive the service-related information from the node D.

Assuming that the communication parameter is adjusted based on the current service association relationship, and the first parameter is the adjusted communication parameter of the first distributed node, the second service-related information is service-related data that is on the service neighboring node and that is obtained based on the adjusted communication parameter, the service neighboring node is determined based on the first service-related information, and the first service-related information is obtained based on the communication parameter before the adjustment.

Correspondingly, in FIG. 4C, the first distributed node is the node C, and the service neighboring nodes of the node C are determined based on the first service-related information, as shown in (a) in FIG. 4C, including the node B and the node D. That the first distributed node obtains the service-related data on the service neighboring nodes based on the adjusted communication parameter may be reflected as an adjustment of the communication association relationship graph. As shown in (c) in FIG. 4C, the node C may obtain the service-related information from the node B, and may also obtain the service-related information from the node D well, without being limited by a poor communication parameter.

406: The first distributed node inputs an input parameter of a service model into the service model, to obtain an output parameter of the service model through inference, where the input parameter of the service model includes the second service-related information.

When the service model is configured on the first distributed node, the first distributed node may input the obtained second service-related information and the service-related information of the first distributed node into the service model for inference, to obtain the output parameter of the service model.

It can be learned that in this embodiment of this application, the first distributed node sends the first service-related information and the communication link information to the central node, where the first service-related information is determined based on the service association relationship. In this case, after obtaining the first service-related information and the communication link information, the central node may adjust the service association relationship based on the current communication condition, to indicate the first distributed node to adjust the service neighboring node based on the adjusted service association relationship, and obtain the service-related information from the adjusted service neighboring node to perform the service model inference process, so that accuracy of a service model inference result is improved, thereby improving system performance.

Alternatively, in this embodiment of this application, after obtaining the first service-related information and the communication link information, the central node may adjust the communication parameter based on the current service association relationship, to indicate the first distributed node to perform communication based on the adjusted communication parameter, and obtain the service-related information from the service neighboring node based on the adjusted communication parameter to perform the service model inference process, so that quality of the obtained service-related information can be ensured, and accuracy of a service model inference result is improved, thereby improving system performance.

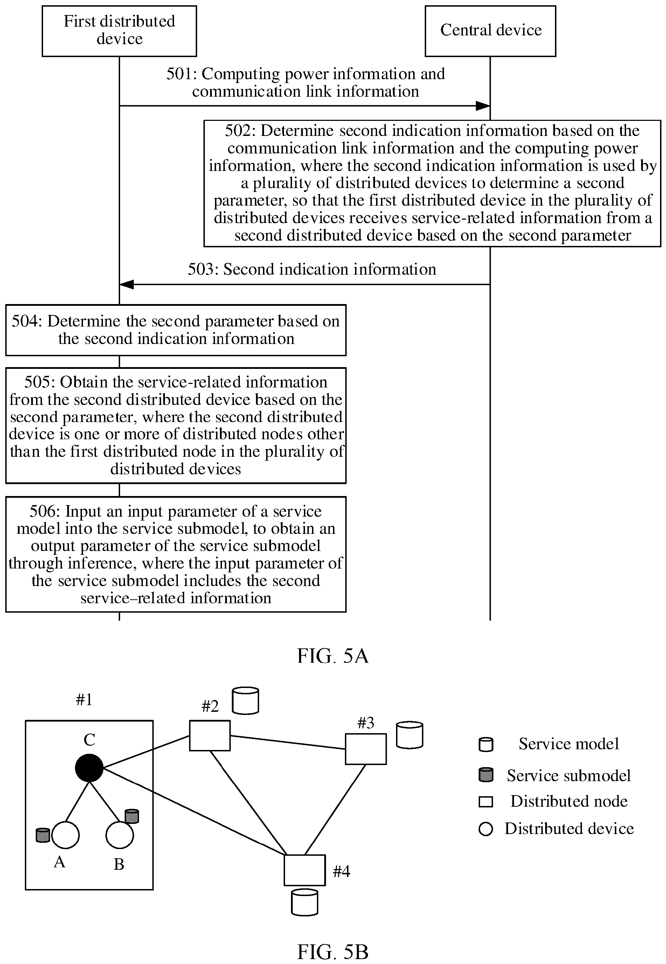

An embodiment of this application further provides another data processing method. This corresponds to the foregoing described case in which one node corresponds to a plurality of devices. Refer to FIG. 5A. The method includes the following steps.

501: A first distributed device sends computing power information and communication link information to a central device.

The foregoing method is applied to a distributed node, where the distributed node includes a central device and at least one distributed device, a service submodel is configured on the distributed device, and a plurality of service submodels constitute a service model of the distributed node.

For details, refer to FIG. 5B. An embodiment of this application provides a schematic diagram of a distributed learning system. As shown in FIG. 5B, a distributed device A, a distributed device B, and a central device C form a distributed node #1. The distributed node #1 may be connected to a distributed node #2 and a distributed node #4. A connection between the distributed node #1 and another distributed node is specifically a connection between the distributed device or the central device and another distributed node. In a possible case, this is because various distributed devices may be configured with different computing modules, for example, a common central processing unit (central processing unit, CPU), a graphics processing unit (graphics processing unit, GPU), and an embedded neural network processing unit (neural network processing unit, NPU). When a computing module of a single distributed device has a limited capability and cannot complete computation of a complete machine learning model, the machine learning model may be split into a plurality of submodels deployed on different distributed devices. There is a computing connection relationship between the distributed devices on which different submodels of the complete machine learning model are deployed. In other words, the corresponding service submodels are separately deployed on a plurality of distributed devices that have the computing connection relationship, and are used to complete an inference process of some service submodels. The service submodels are combined together to complete an inference process of a service model. Functions of the plurality of distributed devices correspond to functions of one of the foregoing distributed nodes. When a service model on the distributed node #1 needs to perform information exchange with another distributed node, this may be implemented via the central device C in the distributed node #1.

502: The central device receives computing power information and communication link information that are sent by the plurality of distributed devices, and determines second indication information based on the communication link information and the computing power information, where the second indication information is used by the plurality of distributed devices to determine a second parameter, so that a first distributed device in the plurality of distributed devices receives service-related information from a second distributed device based on the second parameter.

If communication between the central device and the distributed devices is reachable, the central device may receive information sent by the distributed devices, may perform processing based on the information, to generate some results, and feed back the results to the distributed devices. In this way, when the distributed devices cannot communicate with each other, the same information may alternatively be obtained via the central device.

The central device receives the computing power information and the communication link information that are sent by the plurality of distributed devices, and may determine the second indication information based on the communication link information and the computing power information. When the plurality of distributed devices correspond to the first distributed device, the second indication information indicates the first distributed device to receive the service-related information from the second distributed device based on the second parameter. That is, in a process in which the central device indicates, based on the computing power information and the communication link information that are sent by the distributed devices, the distributed device to obtain the service-related information from the second distributed device, a process in which the computing power information and the communication link information affect each other is comprehensively considered, so that reasonableness of obtaining the service-related information is improved.

503: The central device sends the second indication information to the first distributed device.

504: The first distributed device receives the second indication information from the central device, and determines the second parameter based on the second indication information.

Optionally, the second indication information is model segmentation indication information or computing power allocation indication information, and the second parameter is an adjusted computing connection relationship.

Optionally, the determining second indication information based on the communication link information and the computing power information includes: determining a computing connection relationship of the first distributed device based on the computing power information; determining a communication connection relationship of the first distributed device based on the communication link information; and obtaining an adjusted computing connection relationship based on the communication connection relationship, and determining the second indication information.

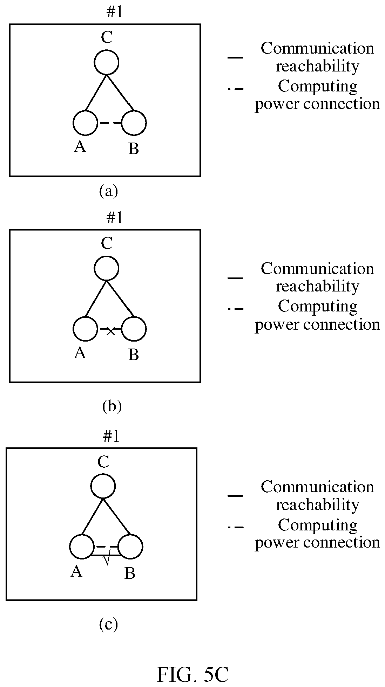

Specifically, after receiving the computing power information uploaded by the plurality of distributed devices, the central device may determine a computing connection relationship between the plurality of distributed devices based on the computing power information. FIG. 5C is a schematic diagram of a process of generating second indication information according to an embodiment of this application. As shown in (a) in FIG. 5C, it is assumed that a first distributed device is a device A, and uploaded computing power information includes: classifying a first image subset in a first image set; and computing power information uploaded by a device B includes: classifying a second image subset in the first image set. It may be determined that there is a computing connection relationship between the device A and the device B, and the two devices are jointly configured to complete image classification of the first image set.

After receiving communication link information uploaded by a plurality of distributed devices, the central device may determine a communication connection relationship and/or communication connection quality between the plurality of distributed devices based on the communication link information. For example, the first distributed device is the device A, and communication link information uploaded by the device A to the central device indicates that there is no communication connection relationship between the device A and the device B, that is, communication is unreachable. There is a computing connection relationship between the device A and the device B, but the communication is unreachable. In a possible case, the computing connection relationship may be adjusted based on a current communication condition, to affect a process of obtaining service-related information.

Second indication information generated by the central device may be model segmentation indication information or computing power allocation indication information, and a second parameter is the adjusted computing connection relationship. After receiving the second indication information, the first distributed device adjusts a model segmentation manner or a computing power allocation manner based on the second indication information, and determines the second parameter, where the second parameter may be the adjusted computing connection relationship. As shown in (b) in FIG. 5C, communication between the device A and the device B is unreachable. In this case, it may be considered that the two devices cannot cooperate with each other to complete a service model inference process, that is, submodels obtained by splitting a complete model are not placed on the two devices. That is, a computing connection relationship between the two devices is adjusted from a computing connection to no computing connection.

Optionally, the second indication information indicates the plurality of distributed devices to adjust a communication parameter, and the second parameter is an adjusted communication parameter of the first distributed device.

Optionally, the determining second indication information based on the communication link information and the computing power information includes: determining a communication parameter of the first distributed device before adjustment based on the communication link information; determining a computing connection relationship of the first distributed device based on the computing power information; determining an adjusted communication parameter of the first distributed device based on the computing connection relationship; and determining the second indication information based on the adjusted communication parameter.

There is the computing connection between the device A and the device B, but the communication is unreachable. In a possible case, a communication parameter may be adjusted based on the current computing connection relationship, to affect a process in which the service submodels cooperate with each other to complete service model functions.

The second indication information generated by the central device indicates the plurality of distributed devices to adjust the communication parameter, and may further include how to specifically adjust a communication mechanism to adjust the communication parameter. For example, the second indication information indicates the first distributed device to adjust an MCS level at which the first distributed device communicates with the distributed device 1, transmit power, a beamforming parameter, and the like to adjust the communication parameter. After receiving the second indication information, the first distributed device adjusts the communication mechanism based on the indication, to obtain the second parameter, namely, the adjusted communication parameter. For details, refer to (c) in FIG. 5C. After the device A increases transmit power, if a communication rate between the device A and the device B reaches a normal communication rate, the communication connection relationship between the device A and the device B changes from communication unreachability to communication reachability.

505: The first distributed device obtains the service-related information from the second distributed device based on the second parameter, where the second distributed device is one or more of distributed nodes other than the first distributed node in the plurality of distributed devices.

In the foregoing process, assuming that the computing connection relationship is adjusted based on the current communication condition, and the second parameter is the adjusted computing connection relationship, the second distributed device is an adjusted computing power neighboring device determined based on the adjusted computing connection relationship, the service-related information of the second distributed device is an inference result obtained after the adjusted computing power neighboring device completes inference of the service submodel, and the first distributed device forms and completes, based on an inference result that is of the service submodel and that is obtained by the first distributed device, and the inference result obtained from the computing power neighboring device, an inference result of the service model.

As shown in (a) in FIG. 5C, when the first distributed device A sends computing power information to the central device C, the computing power information may include local computing power information of the device A and computing power information on the computing power neighboring device B before adjustment. When obtaining the service-related information of the second distributed device based on the second parameter, as shown in (b) in FIG. 5C, the first distributed device no longer obtains the inference result of the service submodel from the device B based on the adjusted computing connection relationship.

Assuming that the communication parameter is adjusted based on the current computing connection relationship, and the second parameter is the adjusted communication parameter of the first distributed device, the service-related information is an inference result of a service submodel that is on a computing power neighboring device and that is obtained based on the adjusted communication parameter. The computing power neighboring device is determined based on the computing power information, and the computing power information is obtained based on the communication parameter before the adjustment.

Correspondingly, in FIG. 5C, the first distributed device is a device A, and a computing power neighboring device of the device A is determined based on computing power information, as shown in (a) in FIG. 5C, including a device B. That the first distributed device obtains service-related information on the computing power neighboring device based on an adjusted communication parameter may be reflected as an adjustment of a communication association relationship graph. As shown in (c) in FIG. 5C, the device A may obtain the service-related information from the device B without being limited by a poor communication parameter.

506: The first distributed device inputs an input parameter of the service submodel into the service submodel, to obtain an output parameter of the service submodel through inference, where the input parameter of the service submodel includes the service-related information.

When the service submodel is configured on the first distributed device, the first distributed device may input the obtained second service-related information and the service-related information of the first distributed device into the service submodel for inference, to obtain the output parameter of the service submodel. In a possible case, an inference result of the computing power neighboring device may be an input parameter of a service submodel on a target neighboring device. For example, if the service submodel deployed on the computing power neighboring node corresponds to an $i^{th}$ layer of the service model, and the service submodel of the target neighboring device corresponds to an $(i+1)^{th}$ layer of the service model, the inference result of the computing power neighboring device is an input parameter of the service submodel on the target neighboring device. Finally, an output result of the distributed device on which the service submodel corresponding to the $L^{th}$ layer of the service model is deployed is an output result of the service model, and L is a total quantity of neural network layers corresponding to the service model.

It can be learned that in this embodiment of this application, the first distributed device sends the computing power information and the communication link information to the central device, where the computing power information is determined based on software and hardware capabilities of the distributed device and a computing power resource allocation status. In this case, after obtaining the computing power information and the communication link information, the central device may adjust the computing connection relationship based on a current communication condition, to indicate the first distributed device to adjust the computing power neighboring device based on the adjusted computing connection relationship, and obtain the service-related information from the adjusted computing power neighboring device to perform a service model inference process, so that accuracy of a service model inference result is improved, thereby improving system performance.

Alternatively, in this embodiment of this application, after obtaining the computing power information and the communication link information, the central device may adjust the communication parameter based on the current computing connection relationship, to indicate the first distributed device to perform communication based on the adjusted communication parameter, and obtain the service-related information from the computing power neighboring device based on the adjusted communication parameter to perform the service model inference process, so that quality of the obtained service-related information can be ensured, and accuracy of a service model inference result is improved, thereby improving system performance.

It may be understood that this embodiment of this application may be used in combination with the embodiment described in FIG. 3, or may be used in combination with the embodiments described in FIG. 4A to FIG. 4C. To be specific, in a distributed learning system, a process in which the service model on the node performs service inference is used with reference to both mutual impact between the service association relationship and the communication connection relationship and mutual impact between the communication connection relationship and the computing power connection relationship, so that system performance is improved.

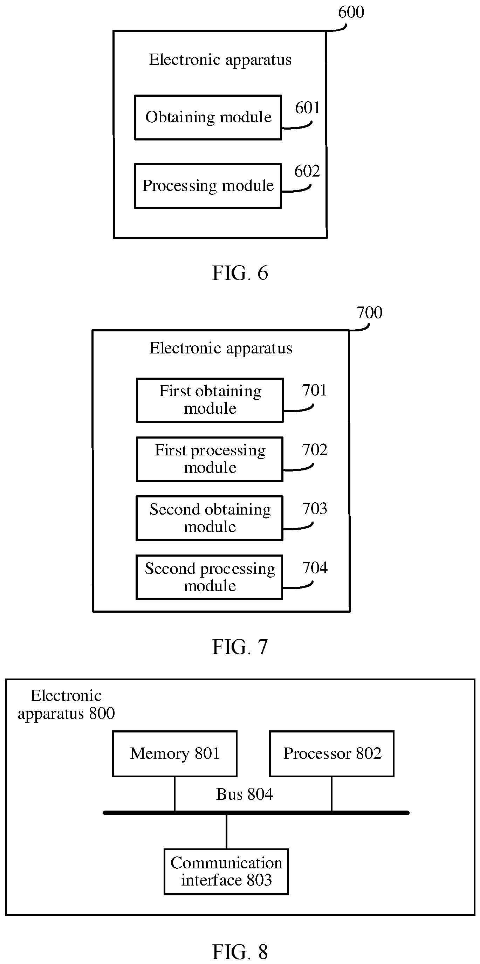

The following describes in detail communication apparatuses in embodiments of this application with reference to FIG. 6 to FIG. 8.

FIG. 6 shows an electronic apparatus 600 according to an embodiment of this application. The apparatus is used in a first distributed node in a distributed learning system. The distributed learning system includes a plurality of distributed nodes, and communication models and service models are configured on the distributed nodes. The apparatus may be configured to perform the method and a specific embodiment performed by the distributed node in FIG. 2A to FIG. 2D.

In a possible implementation, as shown in FIG. 6, the apparatus 600 includes:

> an obtaining module 601, configured to obtain an input parameter of the service model, where the input parameter of the service model includes an output parameter of the communication model, and the output parameter of the communication model is used to represent a communication connection status and/or communication connection quality between the plurality of distributed nodes; and
> a processing module 602, configured to input the input parameter of the service model into the service model, to obtain an output parameter of the service model.

Optionally, the input parameter of the service model further includes local service-related information of the first distributed node and service-related information of a service neighboring node, where the service neighboring node is a distributed node in the plurality of distributed nodes that has service association with the first distributed node.

Optionally, that the input parameter of the service model further includes local service-related information of the first distributed node and service-related information of a service neighboring node includes: When the service model is at an $i^{th}$ layer, service-related information of a service neighboring node included in an input parameter of the service model is an output parameter obtained by an $(i-1)^{th}$ layer of a service model on the service neighboring node through inference; and when i = 1, the service-related information of the service neighboring node included in the input parameter of the service model is service-related information that is on the service neighboring node and that is obtained without model inference, where $1 \leq i \leq L$, and L is a total quantity of layers of the service model.

Optionally, the output parameter of the communication model is obtained by inputting local communication link information of the first distributed node and communication link information of a communication neighboring node into the communication model on the first distributed node for inference, where the communication neighboring node is a distributed node in the plurality of distributed nodes that has a communication connection relationship with the first distributed node.

Optionally, the communication link information includes communication reachability information, a channel status, and/or an interference status between the first distributed node and the communication neighboring node.

Optionally, the service-related information and/or the service-related information that is obtained without model inference includes one or more of the following: service data, an intermediate result of service model inference, a service type, a data type, and a data distribution parameter.

Optionally, the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a protocol layer corresponding to service content.

Optionally, that the service subsystem is deployed at a protocol layer corresponding to service content includes: When the service model is an image classification model or a natural language processing model, the service subsystem is deployed at an application layer based on the service content; or when the service model is a radio resource management decision model, the service subsystem is deployed at a media access control layer based on the service content.

Optionally, the processing module 602 may be a central processing unit (Central Processing Unit, CPU).

Optionally, the apparatus may further include a sending module (not shown in the figure). The obtaining module 601 and the sending module may be interface circuits or transceivers; and may be configured to: receive or send data or instructions from another electronic apparatus.

Optionally, the electronic apparatus 600 may further include a storage module (not shown in the figure). The storage module may be configured to store data and/or signaling. The storage module may be coupled to the obtaining module 601, the sending module, and the processing module 602. For example, the processing module 602 may be configured to read the data and/or the signaling in the storage module, so that a process of inputting the input parameter of the service model into the service model and obtaining the output parameter of the service model in the foregoing method embodiment is performed.

FIG. 7 shows an electronic apparatus 700 according to an embodiment of this application. The apparatus is used in a first distributed node in a distributed learning system. The distributed learning system includes a plurality of distributed nodes, and communication models and service models are configured on the first distributed nodes. The apparatus may be configured to perform the method and a specific embodiment performed by the distributed node in FIG. 3. In a possible implementation, as shown in FIG. 7, the apparatus 700 includes:

a first obtaining module 701, configured to obtain an input parameter of the communication model, where the input parameter of the communication model includes a first output parameter of the service model, and the first output parameter is used to represent a degree of service association between the first distributed nodes;

a first processing module 702, configured to input the input parameter of the communication model into the communication model, to obtain an output parameter of the communication model, where the first processing module is further configured to adjust a communication parameter of the first distributed nodes based on the output parameter of the communication model;

a second obtaining module 703, configured to obtain an input parameter of the service model, where the input parameter of the service model includes local service-related information of the first distributed node and first service-related information of a service neighboring node, the first service-related information of the service neighboring node is obtained from the service neighboring node based on the adjusted communication parameter, and the service neighboring node is a distributed node that has service association with the first distributed node; and
a second processing module 704, configured to input the input parameter of the service model into the service model, to obtain a second output parameter of the service model.

Optionally, the input parameter of the communication model further includes local communication link information of the first distributed node and communication link information of a communication neighboring node, and the communication neighboring node is a distributed node in the plurality of distributed nodes that has a communication connection relationship with the first distributed node.

Optionally, the first output parameter of the service model is obtained by inputting the local service-related information of the first distributed node and second service-related information of the service neighboring node into the service model on the first distributed node for inference, and the second service-related information of the service neighboring node is obtained from the service neighboring node based on the communication parameter before the adjustment.

Optionally, the communication link information includes communication reachability information, a channel status, and/or an interference status between the first distributed node and another node other than the first distributed node in the plurality of distributed nodes, the service-related information includes one or more of the following: service data, an intermediate result of service model inference, a service type, a data type, and a data distribution parameter, and the service-related information includes the first service-related information and the second service-related information.

Optionally, the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a corresponding protocol layer based on service content.

Optionally, that the service subsystem is deployed at a protocol layer corresponding to service content includes: When the service model is an image classification model or a natural language processing model, the service subsystem is deployed at an application layer based on the service content; or when the service model is a radio resource management decision model, the service subsystem is deployed at a media access control layer based on the service content.

Optionally, the first obtaining module 701 and the second obtaining module 703 may be interface circuits or transceivers, and may be configured to: receive or send data or instructions from another electronic device, for example, obtain the first service-related information from the service neighboring node.

Optionally, the first processing module 702 and the second processing module 704 may be central processing units (Central Processing Units, CPUs).

Optionally, the electronic apparatus 700 may further include a storage module (not shown in the figure). The storage module may be configured to store data and/or signaling. The storage module may be coupled to the first obtaining module 701, the second obtaining module 703, the first processing module 702, and the second processing module 704. For example, the first processing module 702 may be configured to read the data and/or the signaling in the storage module, so that the first distributed node inputs the input parameter of the communication model into the communication model, to obtain the output parameter of the communication model in the foregoing method embodiment.

FIG. 8 is a schematic diagram of a structure of an according to an electronic apparatus according to an embodiment of this application. For structures of the electronic apparatus 600 and the electronic apparatus 700, refer to the structure shown in FIG. 8. The electronic apparatus 800 includes a memory 801, a processor 802, a communication interface 803, and a bus 804. The memory 801, the processor 802, and the communication interface 803 implement communication connection between each other through the bus 804.

The memory 801 may be a read-only memory (Read-Only Memory, ROM), a static storage device, a dynamic storage device, or a random access memory (Random Access Memory, RAM). The memory 801 may store a program. When the program stored in the memory 801 is executed by the processor 802, the processor 802 and the communication interface 803 are configured to perform steps in the data processing methods in embodiments of this application.

The processor 802 may be a general-purpose CPU, a microprocessor, an application-specific integrated circuit (Application-Specific Integrated Circuit, ASIC), a GPU, or one or more integrated circuits, and is configured to execute a related program, to implement functions that need to be performed by the processing module 602 in the electronic apparatus 600 in embodiments of this application, or to implement functions that need to be performed by the first processing module 702 and the second processing module 704 in the electronic apparatus 700, or to perform the data processing methods in method embodiments of this application.

The processor 802 may be an integrated circuit chip and has a signal processing capability. In an implementation process, the steps in the data processing method in this application may be completed by using a hardware integrated logical circuit in the processor 802 or instructions in a form of software. The processor 802 may alternatively be a general-purpose processor, a digital signal processor (Digital Signal Processing, DSP), an application-specific integrated circuit (ASIC), a field programmable gate array (Field Programmable Gate Array, FPGA) or another programmable logical device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by using a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 801. The processor 802 reads information in the memory 801, and completes, in combination with hardware of the processor, functions that need to be performed by the modules included in the electronic apparatus 600 or the electronic apparatus 700 in embodiments of this application, or performs the data processing methods in method embodiments of this application.

The communication interface 803 uses a transceiver apparatus, for example, but not limited to, a transceiver, to implement communication between the electronic apparatus 800 and another device or a communication network. For example, an input parameter of a service model may be obtained through the communication interface 803. The bus 804 may include a channel on which information is transmitted between the components (for example, the memory 801, the processor 802, and the communication interface 803) of the electronic apparatus 800.

It should be noted that although the electronic apparatus 800 shown in FIG. 8 only shows the memory, the processor, and the communication interface, in a specific implementation process, a person skilled in the art should understand that the electronic apparatus 800 further includes other devices necessary for implementing normal running. In addition, based on a specific requirement, a person skilled in the art should understand that the electronic apparatus 800 may further include hardware devices for implementing other additional functions. In addition, a person skilled in the art should understand that the electronic apparatus 800 may include only devices required for implementing embodiments of this application, but not necessarily include all the devices shown in FIG. 8.

An embodiment of this application further provides a communication system. The communication system includes a first communication apparatus and a second communication apparatus. The first communication apparatus may be configured to perform the method performed by the first distributed node in embodiments corresponding to FIG. 2A to FIG. 2E, and the second communication apparatus may be configured to perform the method performed by another distributed node other than the first distributed node in the distributed learning system in the embodiments corresponding to FIG. 2A to FIG. 2E. Alternatively, the first communication apparatus is configured to perform the method performed by the first distributed node in the embodiment corresponding to FIG. 3, and the second communication apparatus may be configured to perform the method performed by another distributed node other than the first distributed node in the distributed learning system in the embodiment corresponding to FIG. 3. Alternatively, the first communication apparatus is configured to perform the method performed by the first distributed node in the embodiments corresponding to FIG. 4A to FIG. 4C, and the second communication apparatus may be configured to perform the method performed by the central node in the embodiments corresponding to FIG. 4A to FIG. 4C. Alternatively, the first communication apparatus is configured to perform the method performed by the first distributed device in the embodiments corresponding to FIG. 5A to FIG. 5C, and the second communication apparatus may be configured to perform the method performed by the central device in the embodiments corresponding to FIG. 5A to FIG. 5C.

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores a computer program or computer-executable instructions. When the computer program or the computer-executable instructions are run on a computer, the computer is enabled to perform operations and/or processing performed by the first communication apparatus in the method provided in this application.

This application further provides a computer-readable storage medium. The computer-readable storage medium stores a computer program or computer-executable instructions. When the computer program or the computer-executable instructions are run on a computer, the computer is enabled to perform operations and/or processing performed by the second communication apparatus in the method provided in this application.

This application further provides a computer program product. The computer program product includes computer-executable instructions or a computer program. When the computer-executable instructions or the computer program is run on a computer, operations and/or processing performed by the first communication apparatus in the method provided in this application are performed.

This application further provides a computer program product. The computer program product includes computer-executable instructions or a computer program. When the computer-executable instructions or the computer program is run on a computer, operations and/or processing performed by the second communication apparatus in the method provided in this application are performed.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the modules is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate components may or may not be physically separate, and components displayed as modules may or may not be physical modules, that is, may be located in one location, or may be distributed on a plurality of network modules. Some or all the modules may be selected based on an actual requirement to achieve the objectives of the solutions of the embodiments.

In addition, functional modules in this application may be integrated into one processing module, or each of the modules may exist alone physically, or two or more modules are integrated into one module.

When the functions are implemented in a form of a software functional module and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device or the like) to perform all or some of the steps in the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

**Claims**

1. A data processing method, wherein the method is applied to a first distributed node in a distributed learning system, the distributed learning system comprises a plurality of distributed nodes, communication models and service models are configured on the distributed nodes, and the method comprises:

   obtaining an input parameter of the service model, wherein the input parameter of the service model comprises an output parameter of the communication model, and the output parameter of the communication model is used to represent a communication connection status and/or communication connection quality between the plurality of distributed nodes; and
   inputting the input parameter of the service model into the service model, to obtain an output parameter of the service model.

2. The method according to claim 1, wherein the input parameter of the service model further comprises local service-related information of the first distributed node and service-related information of a service neighboring node, wherein the service neighboring node is a distributed node in the plurality of distributed nodes that has service association with the first distributed node.

3. The method according to claim 2, wherein when the service model is at an $i^{th}$ layer, service-related information of a service neighboring node comprised in an input parameter of the service model is an output parameter obtained by an $(i-1)^{th}$ layer of a service model on the service neighboring node through inference; and when i = 1, the service-related information of the service neighboring node comprised in the input parameter of the service model is service-related information that is on the service neighboring node and that is obtained without model inference, wherein $1 \le i \le L$, and L is a total quantity of layers of the service model.

4. The method according to claim 1, wherein the output parameter of the communication model is obtained by inputting local communication link information of the first distributed node and communication link information of a communication neighboring node into the communication model on the first distributed node for inference, wherein the communication neighboring node is a distributed node in the plurality of distributed nodes that has a communication connection relationship with the first distributed node.

5. The method according to claim 4, wherein the communication link information comprises communication reachability information, a channel status, and/or an interference status between the first distributed node and the communication neighboring node.

6. The method according to claim 3, wherein the service-related information and/or the service-related information that is obtained without model inference comprises one or more of the following: service data, an intermediate result of service model inference, a service type, a data type, and a data distribution parameter.

7. The method according to any one of claims 1 to 6, wherein the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a protocol layer corresponding to service content.

8. The method according to claim 7, wherein when the service model is an image classification model or a natural language processing model, the service subsystem is deployed at an application layer based on the service content; or when the service model is a radio resource management decision model, the service subsystem is deployed at a media access control layer based on the service content.

9. A data processing method, wherein the method is applied to a first distributed node in a distributed learning system, the distributed learning system comprises a plurality of distributed nodes, communication models and service models are configured on the plurality of distributed nodes, and the method comprises:

    obtaining an input parameter of the communication model, wherein the input parameter of the communication model comprises a first output parameter of a service model, and the first output parameter is used to represent a degree of service association between the plurality of distributed nodes;
    inputting the input parameter of the communication model into the communication model, to obtain an output parameter of the communication model;
    adjusting a communication parameter of the first distributed node based on the output parameter of the communication model;
    obtaining an input parameter of the service model, wherein the input parameter of the service model comprises local service-related information of the first distributed node and first service-related information of a service neighboring node, the first service-related information of the service neighboring node is obtained from the service neighboring node based on the adjusted communication parameter, and the service neighboring node is a distributed node that has service association with the first distributed node; and
    inputting the input parameter of the service model into the service model, to obtain a second output parameter of the service model.

10. The method according to claim 9, wherein the input parameter of the communication model further comprises local communication link information of the first distributed node and communication link information of a communication neighboring node, and the communication neighboring node is a distributed node in the plurality of distributed nodes that has a communication connection relationship with the first distributed node.

11. The method according to claim 9, wherein the first output parameter of the service model is obtained by inputting the local service-related information of the first distributed node and second service-related information of the service neighboring node into the service model on the first distributed node for inference, and the second service-related information of the service neighboring node is obtained from the service neighboring node based on the communication parameter before the adjustment.

12. The method according to any one of claims 9 to 11, wherein the communication link information comprises communication reachability information, a channel status, and/or an interference status between the first distributed node and another node other than the first distributed node in the plurality of distributed nodes, the service-related information comprises one or more of the following: service data, an intermediate result of service model inference, a service type, a data type, and a data distribution parameter, and the service-related information comprises the first service-related information and the second service-related information.

13. The method according to claim 9, wherein the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a corresponding protocol layer based on service content.

14. The method according to claim 13, wherein that the service subsystem is deployed at a protocol layer corresponding to service content comprises: when the service model is an image classification model or a natural language processing model, the service subsystem is deployed at an application layer based on the service content; or when the service model is a radio resource management decision model, the service subsystem is deployed at a media access control layer based on the service content.

15. A data processing method, wherein the method is applied to a first distributed node in a distributed learning system, the distributed learning system comprises one central node and a plurality of distributed nodes, communication models and service models are configured on the distributed nodes, and the method comprises:

sending first service-related information and communication link information to the central node;
receiving first indication information from the central node, wherein the first indication information is determined by the central node based on the communication link information and the first service-related information that are sent by the plurality of distributed nodes;
determining a first parameter based on the first indication information;

receiving second service-related information of a second distributed node based on the first parameter, wherein the second distributed node is one or more of distributed nodes other than the first distributed node in the plurality of distributed nodes; and
inputting an input parameter of the service model into the service model, to obtain an output parameter of the service model through inference, wherein the input parameter of the service model comprises the second service-related information.

16. The method according to claim 15, wherein the first indication information indicates the plurality of distributed nodes to adjust a communication parameter, the first parameter is an adjusted communication parameter of the first distributed node, and the determining a first parameter based on the first indication information comprises:

inputting the input parameter of the service model into the service model to obtain a first output parameter, wherein the input parameter of the service model comprises the first service-related information, and the first output parameter is used to represent a degree of service association between the first distributed node and another distributed node; and
inputting an input parameter of the communication model into the communication model to obtain a second output parameter, and obtaining an adjusted communication parameter based on the second output parameter, wherein the second service-related information is service-related data that is on a service neighboring node and that is obtained based on the adjusted communication parameter, the service neighboring node is determined based on the first service-related information, and the first service-related information is service-related data that is on the service neighboring node and that is obtained based on the communication parameter before the adjustment.

17. The method according to claim 15, wherein the first indication information is service-related indication information or service-related information distribution indication information, the first parameter is an adjusted service association relationship, the second distributed node is an adjusted service neighboring node determined based on the adjusted service association relationship, the second service-related information on the second distributed node is service-related information on the adjusted service neighboring node, and the first service-related information is service-related information of the first distributed node and service-related information on a service neighboring node before adjustment; and
the service-related indication information indicates whether there is service association between the first distributed node and another distributed node, and the service-related information distribution indication information indicates to distribute mutually associated service-related information to different nodes in the plurality of distributed nodes.

18. The method according to any one of claims 15 to 17, wherein the communication link information comprises communication reachability information, a channel status, and/or an interference status between the first distributed node and another node other than the first distributed node in the plurality of distributed nodes, and the service-related information comprises one or more of the following: service data, an intermediate result of service model inference, a service type, a data type, and a data distribution parameter.

19. The method according to claim 15, wherein the communication models on the plurality of distributed nodes constitute a communication subsystem, and the communication subsystem is deployed at a physical layer or a media access control layer; and the service models on the plurality of distributed nodes constitute a service subsystem, and the service subsystem is deployed at a corresponding protocol layer based on service content.

20. The method according to claim 19, wherein that the service subsystem is deployed at a protocol layer corresponding to service content comprises: when the service model is an image classification model or a natural language processing model, the service subsystem is deployed at an application layer based on the service content; or when the service model is a radio resource management decision model, the service subsystem is deployed at a media access control layer based on the service content.

21. A data processing method, wherein the method is applied to a central node in a distributed learning system, the distributed learning system comprises one central node and a plurality of distributed nodes, communication models and service models are configured on the distributed nodes, and the method comprises:

   receiving first service-related information and communication link information that are sent by the plurality of distributed nodes;
   determining first indication information based on the communication link information and the first service-related information, wherein the first indication information is used by the plurality of distributed nodes to determine a first parameter, so that a first distributed node in the plurality of distributed nodes receives second service-related information from a second distributed node based on the first parameter; and
   sending the first indication information to the first distributed node.

22. The method according to claim 21, wherein the first indication information is service-related indication information or service-related information distribution indication information, the first parameter is an adjusted service association relationship, the second distributed node is an adjusted service neighboring node determined based on the adjusted service association relationship, the second service-related information on the second distributed node is service-related information on the adjusted service neighboring node, and the first service-related information is service-related information of the first distributed node and service-related information on a service neighboring node before adjustment.

23. The method according to claim 21, wherein the first indication information indicates the plurality of distributed nodes to adjust a communication parameter, the first parameter is an adjusted communication parameter of the first distributed node, the second service-related information is service-related data that is on a service neighboring node and that is obtained based on the adjusted communication parameter, the service neighboring node is determined based on the first service-related information, and the first service-related information is obtained based on the communication parameter before the adjustment.

24. The method according to claim 21, wherein the determining first indication information based on the communication link information and the first service-related information comprises:

   determining a service association relationship between the plurality of distributed nodes based on the first service-related information;
   determining a communication connection relationship based on the communication link information; and
   adjusting the service association relationship between the plurality of distributed nodes based on the communication connection relationship, and determining the first indication information.

25. The method according to claim 21, wherein the determining first indication information based on the communication link information and the first service-related information comprises:

   determining a communication parameter of the plurality of distributed nodes before adjustment based on the communication link information; determining a degree of service association between the plurality of distributed nodes based on the first service-related information, and determining adjusted communication parameter based on the degree of service association; and determining the first indication information based on the adjusted communication parameter.

26. The method according to any one of claims 21 to 25, wherein the communication link information comprises communication reachability information, a channel status, and/or an interference status between the first distributed node and another node other than the first distributed node in the plurality of distributed nodes, and the service-related information comprises one or more of the following: service data, an intermediate result of service model inference, a service type, a data type, and a data distribution parameter.

27. A data processing method, wherein the method is applied to a first distributed device in a distributed node, the distributed node comprises a central device and at least one distributed device, a service submodel is configured on the distributed device, a plurality of service submodels constitute a service model of the distributed node, and the method comprises:

> sending, by the distributed devices, computing power information and communication link information to the central device;
> receiving second indication information from the central device, wherein the second indication information is determined by the central device based on the communication link information and the computing power information that are sent by the plurality of distributed devices;
> determining a second parameter based on the second indication information;
> receiving service-related information of a second distributed device based on the second parameter, wherein the second distributed device is one or more of other distributed devices than the first distributed device in the at least one distributed device; and
> inputting an input parameter of the service submodel into the service submodel, to obtain an output parameter of the service submodel through inference, wherein the input parameter of the service submodel comprises the service-related information.

28. The method according to claim 27, wherein the second indication information is model segmentation indication information or computing power allocation indication information, the second parameter is an adjusted computing connection relationship, and the second distributed device is an adjusted computing power neighboring device that is determined based on the adjusted computing connection relationship and that has a computing connection relationship with the first distributed device.

29. The method according to claim 27, wherein the second indication information indicates the plurality of distributed devices to adjust a communication parameter, the second parameter is an adjusted communication parameter of the first distributed device, and the receiving service-related information of a second distributed device based on the second parameter comprises:
   receiving the service-related information of the second distributed device based on the adjusted communication parameter, wherein the second distributed device is a computing power neighboring device that is determined based on the computing power information and has a computing connection to the first distributed device.

30. The method according to any one of claims 27 to 29, wherein the communication link information comprises communication reachability information, a channel status, and/or an interference status between the first distributed node and another node other than the first distributed node in the plurality of distributed nodes, and the service-related information comprises an inference output of the service submodel.

31. A data processing method, wherein the method is applied to a central device in a distributed node, the distributed node comprises one central device and at least one distributed device, a service submodel is configured on the distributed device, a plurality of service submodels constitute a service model of the distributed node, and the method comprises:

> receiving computing power information and communication link information that are sent by the distributed devices;
> determining second indication information based on the communication link information and the computing power information, wherein the second indication information is used by the plurality of distributed devices to determine a second parameter, so that a first distributed device in the at least one distributed device receives service-related information from a second distributed device based on the second parameter; and
> sending the second indication information to the first distributed device.

**32.** The method according to claim 31, wherein the second indication information is model segmentation indication information or computing power allocation indication information, the second parameter is an adjusted computing connection relationship, and the second distributed device is an adjusted computing power neighboring device that is determined based on the adjusted computing connection relationship and that has a computing connection relationship with the first distributed device.

**33.** The method according to claim 31, wherein the second indication information indicates the plurality of distributed devices to adjust a communication parameter, and the second parameter is an adjusted communication parameter of the first distributed device.

**34.** The method according to claim 31, wherein the determining second indication information based on the communication link information and the computing power information comprises:

determining a computing connection relationship of the first distributed device based on the computing power information;
determining a communication connection relationship of the first distributed device based on the communication link information; and
obtaining an adjusted computing connection relationship based on the communication connection relationship, and determining the second indication information.

**35.** The method according to claim 31, wherein the determining second indication information based on the communication link information and the computing power information comprises:

determining a communication parameter of the first distributed device before adjustment based on the communication link information;
determining a computing connection relationship of the first distributed device based on the computing power information;
determining an adjusted communication parameter of the first distributed device based on the computing connection relationship; and
determining the second indication information based on the adjusted communication parameter.

**36.** An electronic apparatus, wherein the apparatus is used in a first distributed node in a distributed learning system, the distributed learning system comprises a plurality of distributed nodes, communication models and service models are configured on the distributed nodes, and the apparatus comprises:

an obtaining module, configured to obtain an input parameter of the service model, wherein the input parameter of the service model comprises an output parameter of the communication model, and the output parameter of the communication model is used to represent a communication connection status and/or communication connection quality between the plurality of distributed nodes; and
a processing module, configured to input the input parameter of the service model into the service model, to obtain an output parameter of the service submodel.

**37.** The apparatus according to claim 36, wherein a module of the apparatus or another module comprised in the apparatus is further configured to implement the method according to any one of claims 2 to 8.

**38.** An electronic apparatus, wherein the apparatus is used in a first distributed node in a distributed learning system, the distributed learning system comprises a plurality of distributed nodes, communication models and service models are configured on the first distributed nodes, and the apparatus comprises:

a first obtaining module, configured to obtain an input parameter of the communication model, wherein the input parameter of the communication model comprises a first output parameter of the service model, and the first output parameter is used to represent a degree of service association between the first distributed nodes;
a first processing module, configured to input the input parameter of the communication model into the communication model, to obtain an output parameter of the communication model, wherein
the first processing module is further configured to adjust a communication parameter of the first distributed nodes based on the output parameter of the communication model;
a second obtaining module, configured to obtain an input parameter of the service model, wherein the input parameter of the service model comprises local service-related information of the first distributed node and first service-related information of a service neighboring node, the first service-related information of the service neighboring node is obtained from the service neighboring node based on the adjusted communication parameter, and the service neighboring node is a distributed node that has service association with the first distributed node; and
a second processing module, configured to input the input parameter of the service model into the service model, to obtain a second output parameter of the service submodel.

39. The apparatus according to claim 38, wherein a module of the apparatus or another module comprised in the apparatus is further configured to implement the method according to any one of claims 10 to 14.

40. An electronic apparatus, wherein the apparatus is used in a first distributed node in a distributed learning system, the distributed learning system comprises one central node and a plurality of distributed nodes, communication models and service models are configured on the distributed nodes, and the apparatus comprises:

   a sending module, configured to send first service-related information and communication link information to the central node;
   a receiving module, configured to receive first indication information from the central node, wherein the first indication information is determined by the central node based on the communication link information and the first service-related information that are sent by the plurality of distributed nodes; and
   a processing module, configured to: determine a first parameter based on the first indication information; receive second service-related information of a second distributed node based on the first parameter, wherein the second distributed node is one or more of distributed nodes other than the first distributed node in the plurality of distributed nodes; and input an input parameter of the service model into the service model, to obtain an output parameter of the service model through inference, wherein the input parameter of the service model comprises the second service-related information.

41. The apparatus according to claim 40, wherein a module of the apparatus or another module comprised in the apparatus is further configured to implement the method according to any one of claims 16 to 20.

42. An electronic apparatus, wherein the apparatus is used in a central node in a distributed learning system, the distributed learning system comprises one central node and a plurality of distributed nodes, communication models and service models are configured on the distributed nodes, and the apparatus comprises:

   a receiving module, configured to receive first service-related information and communication link information that are sent by the plurality of distributed nodes;
   a processing module, configured to determine first indication information based on the communication link information and the first service-related information, wherein the first indication information is used by the plurality of distributed nodes to determine a first parameter, so that a first distributed node in the plurality of distributed nodes receives second service-related information from a second distributed node based on the first parameter; and
   a sending module, configured to send the first indication information to the first distributed node.

43. The apparatus according to claim 42, wherein a module of the apparatus or another module comprised in the apparatus is further configured to implement the method according to any one of claims 22 to 26.

44. An electronic apparatus, wherein the apparatus is used in a first distributed device in a distributed node, the distributed node comprises a central device and at least one distributed device, a service submodel is configured on the distributed device, a plurality of service submodels constitute a service model of the distributed node, and the apparatus comprises:

   a sending module, configured to send computing power information and communication link information to the central device;
   a receiving module, configured to receive second indication information from the central device, wherein the second indication information is determined by the central device based on the communication link information and the computing power information that are sent by the plurality of distributed devices; and
   a processing module, configured to: determine a second parameter based on the second indication information; receive service-related information of a second distributed device based on the second parameter, wherein the second distributed device is one or more of distributed nodes other than the first distributed node in the at least one distributed device; and input an input parameter of the service model into the service submodel, to obtain an output parameter of the service submodel through inference, wherein the input parameter of the service submodel comprises the service-related information.

45. The apparatus according to claim 44, wherein a module of the apparatus or another module comprised in the apparatus is further configured to implement the method according to any one of claims 28 to 30.

46. An electronic apparatus, wherein the apparatus is used in a central device in a distributed node, the distributed node comprises one central device and at least one distributed device, a service submodel is configured on the distributed device, a plurality of service submodels constitute a service model of the distributed node, and the apparatus further comprises:

> a receiving module, configured to receive computing power information and communication link information that are sent by the distributed devices;
>
> a processing module, configured to determine second indication information based on the communication link information and the computing power information, wherein the second indication information is used by the at least one distributed device to determine a second parameter, so that a first distributed device in the at least one distributed device receives service-related information from a second distributed device based on the second parameter; and
>
> a sending module, configured to send the second indication information to the first distributed device.

47. The apparatus according to claim 46, wherein a module of the apparatus or another module comprised in the apparatus is further configured to implement the method according to any one of claims 32 to 35.

48. A communication apparatus, wherein the communication apparatus comprises at least one processor and a communication interface, wherein the communication interface is configured to: receive a signal from another communication apparatus other than the communication apparatus and transmit the signal to the processor, or send a signal from the at least one processor to another communication apparatus other than the communication apparatus, and the at least one processor is configured to implement, by using a logic circuit or executing instructions, the method according to any one of claims 1 to 8 or the method according to any one of claims 9 to 14, or the method according to any one of claims 15 to 20 or the method according to any one of claims 21 to 26, or the method according to any one of claims 27 to 30 or the method according to any one of claims 31 to 35.

49. A computer-readable storage medium, wherein the computer-readable storage medium stores instructions, and when the instructions are run, the method according to any one of claims 1 to 8 is performed or the method according to any one of claims 9 to 14 is performed, or the method according to any one of claims 15 to 20 is performed or the method according to any one of claims 21 to 26 is performed, or the method according to any one of claims 27 to 30 is performed or the method according to any one of claims 31 to 35 is performed.

50. A chip system, wherein the chip system comprises a processor, may further comprise a memory, and is configured to implement the method according to any one of claims 1 to 8, 9 to 14, 15 to 20, 21 to 26, 27 to 30, or 31 to 35, and the chip system may comprise a chip, or may comprise a chip and another discrete device.

51. A computer program product, comprising instructions, wherein when the instructions are run on a computer, the computer is enabled to perform the method in possible implementations according to any one of claims 1 to 8, 9 to 14, 15 to 20, 21 to 26, 27 to 30, or 31 to 35.

52. A communication system, wherein the communication system may comprise the electronic apparatuses according to claims 40 and 41 and/or 42 and 43, or the communication system may comprise the electronic apparatuses according to claims 44 and 45, and/or 46 and 47.

FIG. 1A

FIG. 1B

FIG. 1C

| Obtain an input parameter of a service model, where the input parameter of the service model includes an output parameter of a communication model, and the output parameter of the communication model is used to represent a communication connection status and/or communication connection quality between a plurality of distributed nodes | 201 |

Input the input parameter of the service model into the service model, to obtain an output parameter of the service model — 202

FIG. 2A

☐ Distributed node

⬡ Communication model

⬛ Service model

FIG. 2B

FIG. 2C

FIG. 2D

Output parameter

Activation function

Second graph convolutional layer

Node that performs a convolution operation

Node without service association

Activation function

First graph convolutional layer

Node with service association

Input parameter

Output parameter of a communication model

FIG. 2E

Obtain an input parameter of a communication model, where the input parameter of the communication model includes a first output parameter of a service model, and the first output parameter is used to represent a degree of service association between a plurality of distributed nodes

301

Input the input parameter of the communication model into the communication model, to obtain an output parameter of the communication model

302

Adjust a communication parameter of a first distributed node based on the output parameter of the communication model

303

Obtain an input parameter of the service model, where the input parameter of the service model includes local service–related information of the first distributed node and first service–related information of a service neighboring node, the first service–related information of the service neighboring node is obtained from the service neighboring node based on the adjusted communication parameter, and the service neighboring node is a distributed node that has service association with the first distributed node

304

Input the input parameter of the service model into the service model, to obtain a second output parameter of a service submodel

305

FIG. 3

First distributed node

Central node

401: First service–related information and communication link information

402: Determine first indication information based on the communication link information and the first service–related information, where the first indication information is used by a plurality of distributed nodes to determine a first parameter, so that the first distributed node in the plurality of distributed nodes receives second service–related information from a second distributed node based on the first parameter

403: First indication information

404: Determine the first parameter based on the first indication information

405: Receive the second service–related information of the second distributed node based on the first parameter, where the second distributed node is one or more of distributed nodes other than the first distributed node in the plurality of distributed nodes

406: Input an input parameter of a service model into the service model, to obtain an output parameter of the service model through inference, where the input parameter of the service model includes the second service–related information

FIG. 4A

C
D
B
A
E

☐ Distributed node
⬚ Communication model
■ Service model

FIG. 4B

Communication
reachability
Service
association

(a)

Communication
reachability
Service
association

(b)

Communication
reachability
Service
association

(c)

FIG. 4C

```
┌─────────────────┐                              ┌─────────────────┐
│ First distributed│                              │  Central device │
│     device      │                              │                 │
└────────┬────────┘                              └────────┬────────┘
         │                                                │
         │ 501: Computing power information and           │
         │      communication link information            │
         │───────────────────────────────────────────────>│
         │        ┌───────────────────────────────────────┴──────┐
         │        │ 502: Determine second indication information   │
         │        │ based on the communication link information    │
         │        │ and the computing power information, where the │
         │        │ second indication information is used by a     │
         │        │ plurality of distributed devices to determine  │
         │        │ a second parameter, so that the first          │
         │        │ distributed device in the plurality of         │
         │        │ distributed devices receives service-related   │
         │        │ information from a second distributed device   │
         │        │ based on the second parameter                  │
         │        └───────────────────────────────────────┬──────┘
         │ 503: Second indication information              │
         │<───────────────────────────────────────────────│
```

504: Determine the second parameter based on the second indication information

505: Obtain the service-related information from the second distributed device based on the second parameter, where the second distributed device is one or more of distributed nodes other than the first distributed node in the plurality of distributed devices

506: Input an input parameter of a service model into the service submodel, to obtain an output parameter of the service submodel through inference, where the input parameter of the service submodel includes the second service–related information

FIG. 5A

FIG. 5B

#1

— Communication
   reachability
·— Computing
   power connection

(a)

#1

— Communication
   reachability
·— Computing
   power connection

(b)

#1

— Communication
   reachability
·— Computing
   power connection

(c)

FIG. 5C

600

Electronic apparatus

Obtaining module 601

Processing module 602

FIG. 6

700

Electronic apparatus

First obtaining module 701

First processing module 702

Second obtaining module 703

Second processing module 704

FIG. 7

Electronic apparatus 800

Memory 801    Processor 802

Bus 804

Communication interface 803

FIG. 8

## INTERNATIONAL SEARCH REPORT

| | International application No. |
|---|---|
| | **PCT/CN2022/112834** |

**A. CLASSIFICATION OF SUBJECT MATTER**

G06F 9/50(2006.01)i

According to International Patent Classification (IPC) or to both national classification and IPC

**B. FIELDS SEARCHED**

Minimum documentation searched (classification system followed by classification symbols)

G06F H04L H04W

Documentation searched other than minimum documentation to the extent that such documents are included in the fields searched

Electronic data base consulted during the international search (name of data base and, where practicable, search terms used)

CNKI; CNPAT; WPI; EPODOC: 分布式, 业务, 学习, 训练, 模型, 算力, 通信链路, 状态, 质量, distribution, service, learning, training, model, computation, communication link, state, quality

**C. DOCUMENTS CONSIDERED TO BE RELEVANT**

| Category* | Citation of document, with indication, where appropriate, of the relevant passages | Relevant to claim No. |
|---|---|---|
| X | CN 111065105 A (UNIVERSITY OF ELECTRONIC SCIENCE AND TECHNOLOGY OF CHINA) 24 April 2020 (2020-04-24) description, paragraphs 48-94 | 1-8, 36-37, 48-51 |
| Y | CN 111065105 A (UNIVERSITY OF ELECTRONIC SCIENCE AND TECHNOLOGY OF CHINA) 24 April 2020 (2020-04-24) description, paragraphs 48-94 | 15-35, 40-47, 52 |
| Y | CN 111597055 A (BEIJING YILIU TECHNOLOGY CO., LTD.) 28 August 2020 (2020-08-28) description, paragraphs 35-47 | 15-35, 40-47, 52 |
| A | CN 111880911 A (INSPUR ELECTRONIC INFORMATION INDUSTRY CO., LTD.) 03 November 2020 (2020-11-03) entire document | 1-52 |
| A | CN 107423890 A (NARI TECHNOLOGY DEVELOPMENT LTD. CO. et al.) 01 December 2017 (2017-12-01) entire document | 1-52 |

☑ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 October 2022** | **16 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/112834**

### C. DOCUMENTS CONSIDERED TO BE RELEVANT

| Category* | Citation of document, with indication, where appropriate, of the relevant passages | Relevant to claim No. |
|---|---|---|
| A | CN 111090631 A (NATIONAL UNIVERSITY OF DEFENSE TECHNOLOGY OF PLA) 01 May 2020 (2020-05-01) <br> entire document | 1-52 |
| A | CN 113194034 A (HUAZHONG UNIVERSITY OF SCIENCE AND TECHNOLOGY) 30 July 2021 (2021-07-30) <br> entire document | 1-52 |
| A | US 2021248460 A1 (UATC, LLC.) 12 August 2021 (2021-08-12) <br> entire document | 1-52 |

Form PCT/ISA/210 (second sheet) (January 2015)

**INTERNATIONAL SEARCH REPORT**
Information on patent family members

International application No.

**PCT/CN2022/112834**

| Patent document cited in search report | | | Publication date (day/month/year) | Patent family member(s) | Publication date (day/month/year) |
|---|---|---|---|---|---|
| CN | 111065105 | A | 24 April 2020 | None | |
| CN | 111597055 | A | 28 August 2020 | None | |
| CN | 111880911 | A | 03 November 2020 | None | |
| CN | 107423890 | A | 01 December 2017 | None | |
| CN | 111090631 | A | 01 May 2020 | None | |
| CN | 113194034 | A | 30 July 2021 | None | |
| US | 2021248460 | A1 | 12 August 2021 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110945452